(19) Europäisches Patentamt
European Patent Office
Office européen des brevets

(11) EP 0 884 690 A2

(12) **EUROPÄISCHE PATENTANMELDUNG**

(43) Veröffentlichungstag:
16.12.1998 Patentblatt 1998/51

(51) Int. Cl.⁶: $G06F\ 17/50$

(21) Anmeldenummer: 98102457.3

(22) Anmeldetag: 12.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 11.06.1997 DE 19724718

(71) Anmelder:
SIEMENS AKTIENGESELLSCHAFT
80333 München (DE)

(72) Erfinder: Gernot, Hoyler
81827 München (DE)

(54) **Rechnergestütztes Simulationsverfahren zur Bestimmung eines elektromagnetischen Feldes eines Körpers**

(57) Rechnergestütztes Simulationsverfahren zur Bestimmung eines elektromagnetischen Feldes eines Körpers, der mehrere Teilgebiete umfaßt und mehrere Ladungen und Ströme enthält

Das Verfahren ermöglicht die Bestimmung eines elektromagnetischen Feldes eines Körpers, indem dieser Körper in Teilbereiche unterteilt wird und für die Teilbereiche Multipolentwicklungen durchgeführt werden, die überlagert das elektromagnetische (Gesamt-)Feld ergeben. Die sich ergebenden Differentialgleichungen für die Teilbereiche werden in Matrixform angetragen und numerisch gelöst. Anwendung ist u.a. die Bestimmung der elektromagnetischen Verträglichkeit (EMV) eines Körpers.

**FIG 1**

1a — Durchführen der globalen Multipolentwickungen

1b — Durchführen der lokalen Multipolentwickungen

1c — Bestimmung des elektromagnetischen Feldes aus Überlagerung der durchgeführten Multipolentwicklungen

EP 0 884 690 A2

**Beschreibung**

Die Erfindung betrifft ein rechnergestütztes Simulationsverfahren zur Bestimmung eines elektromagnetischen Feldes eines Körpers, der mehrere Teilgebiete umfaßt und mehrere Ladungen und Ströme enthält.

Aus der DIN-Norm VDE 0870 ist die "Elektromagnetische Verträglichkeit" (EMV) einer elektrischen Einrichtung bekannt als die "Fähigkeit einer elektrischen Einrichtung, in ihrer elektromagnetischen Umgebung zufriedenstellend zu funktionieren, ohne diese Umgebung, zu der auch andere Einrichtungen gehören, unzulässig zu beeinflussen".

Ein zu der Klasse der CG-Verfahren (=Verfahren der konjugierten Gradienten, engl.: conjugate gradient) gehörender Algorithmus mit der Bezeichnung GMRES-Verfahren ist aus [3] bekannt.

Die schnelle Multipolmethode, nachfolgend als FMM (engl.: fast multipole method) bezeichnet ist z.B. aus [4] bekannt. Ein wesentlicher Nachteil bei diesem Formalismus ergibt sich aus der Eigenschaft, daß die Multipolkoeffizienten nicht explizit berechnet werden, wodurch störende Verzerrungen auftreten können, die wiederum zu Fehlern in den Multipolentwicklungen führen.

Die Aufgabe der Erfindung besteht darin, das elektromagnetische Feld eines Körpers zu bestimmen durch einen Rechner, um bereits vor der Realisierung elektromagnetische Verträglichkeit des Körpers gewährleisten zu können und somit aus Messungen und Nachbesserungen bestehende Optimierungszyklen zu vermeiden, wobei die oben dargestellten Nachteile vermieden werden.

Die Aufgabe der Erfindung wird gemäß den Merkmalen des Patentanspruchs 1 gelöst.

In einem rechnergestützten Simulationsverfahren wird ein elektromagnetisches Feld eines Körpers, der mehrere Teilgebiete umfaßt und mehrere Ladungen und Ströme enthält, bestimmt. Dazu werden in den Teilgebieten eine globalen Multipolentwicklung und eine lokale Multipolentwicklung durchgeführt, wobei eine globale Multipolentwicklung die Wirkung der Ladungen und Ströme für entfernte Punkte in Form einer Multipolentwicklung darstellt und analog dazu eine lokale Multipolentwicklung die Wirkung der Ladungen und Ströme an Punkten innerhalb eines der mehreren Teilgebiete in Form einer Multipolentwicklung darstellt. Globale Multipolkoeffizienten werden als Parameter der globalen Multipolentwicklung berechnet, lokale Multipolkoeffizienten werden als Parameter der lokalen Multipolentwicklung berechnet. Schließlich wird das elektromagnetische Feld des Körpers aus der globalen und der lokalen Multipolentwicklung bestimmt.

Mit der Simulation von für EMV notwendige vorgeschriebene Messungen mittels numerischer Verfahren wird die Optimierung der Produktkomponenten wesentlich erleichtert. Der sich wiederholende Prozeß von Messung und Nachbesserung, wobei die simulierte Messung an allen Orten möglich ist, und damit verbundene Kosten und Zeit lassen sich mit dem erfindungsgemäßen Verfahren wesentlich reduzieren.

Das hier vorgestellte Verfahren eignet sich insbesondere zur Simulation von Streuproblemen, bei denen die geometrischen Strukturen der Modelle und damit auch die Dimensionen der Teilgebiete kleiner als die Wellenlänge sind. Unter derartigen Voraussetzungen bleiben die Interferenzeffekte begrenzt, so daß bereits wenige Multipolkoeffizienten zur Beschreibung von Potentialen bzw. Feldstärken ausreichen. Mit dem hier beschriebenen Stabilisierungsverfahren verhält sich das Verfahren auch für tiefe Frequenzen stabil.

Eine erste Weiterbildung der Erfindung besteht darin, den Körper in mindestens ein weiteres Teilgebiet zu unterteilen. Somit besteht der Körper aus Teilgebieten.

Eine andere Weiterbildung besteht darin, iterativ mit einer Startbedingung $I = 0$ bis zu einer Abbruchbedingung, die ein ausreichend kleines Fehlermaß vorgibt, folgende Schritte zur Bestimmung des elektromagnetischen Feldes des Körpers durchzufuhren:

a) Berechnung der globalen Multipolentwicklungen mit globalen Multipolkoeffizienten gemäß

$$c^g = GI,$$

wobei

c     $^g$ ein Vektor ist, der die globalen Multipolkoeffizienten der mehreren Teilgebiete umfaßt,

I     ein Vektor ist, der eine gegebene Stromverteilung angibt,

G     eine Matrix ist, die eine Bestimmung der globalen Multipolkoeffizienten in dem einen Teilgebiet der mehreren Teilgebiete für die gegebene Stromverteilung I angibt;

b) Berechnung der lokalen Multipolentwicklung mit lokalen Multipolkoeffizienten gemäß

EP 0 884 690 A2

$$c^1 = Tc^g,$$

wobei

$c^l$     ein Vektor ist, der die lokalen Multipolkoeffizienten der mehreren Teilgebiete umfaßt,

$T$     eine Translationsmatrix ist, durch die die globalen Multipole in lokale Multipole zusammengeführt werden;

c) Bestimmung des elektromagnetischen Felds aus

$$ZI = Z'I + Lc^1,$$

wobei

$Z$     eine Impedanzmatrix,

$Z'$     einen Teil der Impedanzmatrix $Z$, der Kopplungen zwischen den Teilgebieten darstellt,

$L$     eine Matrix zur Auswertung der lokalen Multipolkoeffizienten,

bezeichnen.

Eine nächste Weiterbildung besteht darin, die Teilgebiete gleich groß zu wählen.

In einer Weiterbildung wird die Größe der Teilgebiete proportional zu einer Entfernung von einem Beobachtergebiet gewählt.

Auch eine Weiterbildung liegt in der Zuordnung jeweils eines Teilgebiets zu einem Bereich mit einheitlicher physikalische. Eigenheit. Dies können große Flachen mit gleicher elektromagnetischer Eigenschaft, beispielsweise gleicher Ladungsverteilung o.ä., sein.

Im Rahmen einer anderen Weiterbildung werden impedanzbehaftete Bauteile innerhalb des zu untersuchenden Körpers direkt als eine Impedanz in der Matrix $Z'$ berücksichtigt.

Ferner kann das elektromagnetische Feld für vorgebbare Frequenzen bestimmt werden.

Eine zusätzliche Weiterbildung besteht darin, die vorgebbaren Frequenzen von einer kleinsten zu untersuchenden Frequenz bis hin zu einer größten zu untersuchenden Frequenz fortgesetzt mit einer vorgebbaren Schrittweite zur Bestimmung des elektromagnetischen Feldes auszuwählen. Dabei kann bei der kleinsten zu untersuchenden Frequenz begonnen werden und bis zur größten zu untersuchenden Frequenz fortgefahren werden oder umgekehrt. Zusätzlich kann auch zwischen der kleinsten und der größten zu untersuchenden Frequenz begonnen werden, wobei bis hin zur kleinsten oder zur größten Frequenz das Verfahren zur Bestimmung des elektromagnetischen Feldes fortgesetzt wird.

Eine zusätzliche Weiterbildung besteht darin, Stabilität des Verfahrens bei tiefen Frequenzen dadurch zu gewährleisten, daß die globalen Multipolentwicklungen elementweise anstatt nach Basisfunktionen durchgeführt wird.

Eine Weiterbildung besteht darin, das Verfahren zur Bestimmung einer elektromagnetischen Verträglichkeit eines Körpers zu verwenden.

Weiterbildungen der Erfindung ergeben sich auch aus den abhängigen Ansprüchen.

Anhand der folgenden Figuren werden Ausführungsbeispiele der Erfindung näher dargestellt.

Es zeigen

Fig.1     Ein Blockdiagramm, das Schritte eines Verfahrens zur Bestimmung des elektromagnetischen Feldes eines Körpers zeigt,

Fig.2     einen ideal leitenden Körper in einem äußeren Feld,

Fig.3     geometrische Größen zu einem Linien-Gewichtungsverfahren,

Fig.4     einen Einfluß eines n-ten Elementpaars auf ein m-tes Elementpaar,

Fig.5a     eine verteilte Impedanz bei impedanzbehafteten Elementen,

Fig.5b     eine konzentrierte Impedanz bei impedanzbehafteten Elementen,

Fig.6     eine Einteilung einer Autokarosserie in Teilgebiete für die Verfeinerungsstufen 2,3 und 4,

Fig.7     eine Einteilung in Teilgebiete bei variierenden Elementgrößen,

Fig.8     eine Skizze, die Kugelkoordinaten r, $\vartheta$, $\alpha$ darstellt,

Fig.9a     eine Skizze, die geometrische Größen zur globalen Multipolentwicklung darstellt,

Fig.9b     eine Skizze, die geometrische Größen zur lokalen Multipolentwicklung darstellt,

Fig.10a     eine Skizze, die eine Leiterschleife und eine Einteilung der Basisfunktionen in vier Teilgebiete darstellt,

Fig.10b     eine Skizze, die an den Rändern der Teilgebiete entstehende Ladungen, die sich nicht mehr auslöschen und zu Abbruchfehlern in der Entwicklung von $\varphi$ führen, zeigt,

Fig.11     eine Skizze, die direkt und indirekt gekoppelte Teilgebiete darstellt,

Fig.12     eine Skizze, die geometrische Größen zur Translation darstellt,

Fig.13     eine Skizze, die direkt und indirekt gekoppelte Teilgebiete für eine zweistufige FMM darstellt.

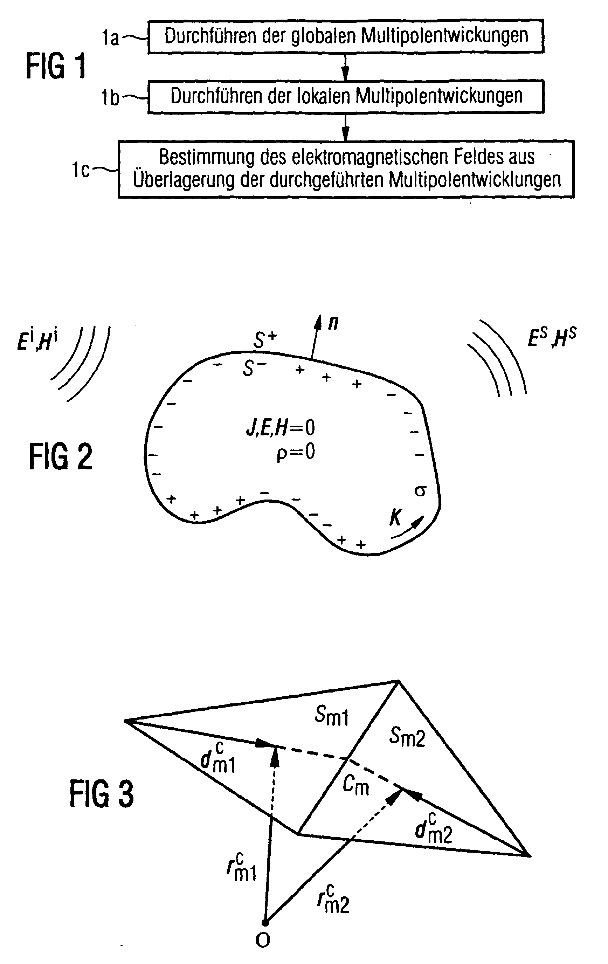

Zunächst wird die Erfindung anhand der Figuren 2 bis 13 näher erläutert.

<u>DIE RETARDIERTEN POTENTIALE</u>

Ausgegangen wird von den Maxwellschen Gleichungen in differentieller Form, wie sie dem Fachmann hinreichend bekannt sind:

$$\nabla \cdot \mathbf{E} = \frac{\rho}{\varepsilon_0} \qquad\qquad (1a)$$

$$\nabla \times \mathbf{E} = -i\omega\mu_0\mathbf{H} \qquad\qquad (1b)$$

$$\nabla \cdot \mathbf{H} = 0 \qquad\qquad (1c)$$

$$\nabla \times \mathbf{H} = \mathbf{J} + i\omega\varepsilon_0\mathbf{E} \qquad\qquad (1d),$$

wobei

$\nabla$     ein Nabla-Operator,

$\mathbf{H}$     eine magnetische Feldstärke,

$\mathbf{E}$     eine elektrische Feldstärke,

$\rho$     eine Raumladungsdichte,

$\varepsilon_0$     eine Permittivität des Vakuums,

$i$     eine imaginäre Einheit ($\sqrt{-1}$),

$\omega$     eine Kreisfrequenz,

$\mu_0$     eine Permeabilität des Vakuums,

$\mathbf{J}$     eine Volumenstromdichte

bezeichnen.

Eine Kontinuitätsgleichung folgt unmittelbar aus den Maxwellschen Gleichungen durch Kombination von Gleichung (1a) mit der Divergenz von Gleichung (1d):

$$\nabla \cdot \mathbf{J} = -i\omega\rho \qquad\qquad (2)$$

Werden die Potentialansätze

$$\mathbf{E} = -i\omega\mathbf{A} - \nabla\varphi \qquad (3a)$$

$$\mathbf{H} = \frac{1}{\mu_0} \nabla \times \mathbf{A} \qquad (3b)$$

verwendet, ergeben sich unter Berücksichtigung der Lorentz-Eichung

$$\nabla \cdot \mathbf{A} + i\omega\varepsilon_0\mu_0\varphi = 0 \qquad (4)$$

die beiden Differentialgleichungen:

$$\left(\nabla^2 + k^2\right)\mathbf{A} = -\mu_0\mathbf{J} \qquad (5a)$$

und

$$(\nabla^2 + k^2)\varphi = -\frac{\rho}{\varepsilon_0} \qquad (5b)$$

mit der Wellenzahl

$$k = \omega\sqrt{\varepsilon_0\mu_0} = \frac{\omega}{c_0} = \frac{2\pi}{\lambda} \qquad (6),$$

wobei

$\mathbf{A}$ ein magnetisches Vektorpotential,
$\varphi$ ein elektrisches Skalarpotential,
$c_0$ eine Vakuumlichtgeschwindigkeit,
$\lambda$ eine Wellenlänge

bezeichnen.

Sowohl das skalare elektrische Potential $\varphi$ als auch die drei kartesischen Komponenten des magnetischen Vektorpotentials $\mathbf{A}$ werden durch dieselbe Art von Differentialgleichung beschrieben, die i.a. als Helmholtz-Gleichung bezeichnet wird:

$$\left(\nabla^2 + k^2\right)\psi(\mathbf{r}) = f(\mathbf{r}) \qquad (7),$$

wobei

$\psi$ eine Basisfunktion,
$\mathbf{r}$ einen Ortsvektor,

f()    eine Funktion von einem Argument

bezeichnen.

Ist die Lösung der Helmholtz-Gleichung für eine diracförmige Anregung auf der rechten Seite bekannt, so kann die Gesamtlösung für eine gegebene Funktion $f(\mathbf{r})$ durch Superposition bestimmt werden. Aus Symmetriegründen ergibt sich für eine diracförmige Anregung im Ursprung eine kugelsymmetrische Lösungsfunktion $\psi$, so daß die Gleichung (7) in Kugelkoordinaten auf die von r abhängige Differentialgleichung

$$\frac{1}{r^2} \frac{\partial}{\partial r} r^2 \frac{\partial}{\partial r} \psi + k^2 \psi^2 = 0 \tag{8}$$

reduziert wird. Wird in Gleichung (8) die Substitution

$$\tilde{\psi} = r\psi$$

durchgeführt, so folgt eine gewöhnliche Differentialgleichung mit konstanten Koeffizienten:

$$\tilde{\psi}'' + k^2 \tilde{\psi} = 0 \tag{9}$$

mit der allgemeinen Lösung:

$$\tilde{\psi} = C_1 e^{-ikr} + C_2 e^{ikr} \tag{10}$$

beziehungsweise

$$\psi = C_1 \frac{e^{-ikr}}{r} + C_2 \frac{e^{ikr}}{r} \tag{11}.$$

Der erste Term aus Gleichung (11) beschreibt eine auslaufende, der zweite Term eine einlaufende Welle. Da letztere aus physikalischen Gründen ausscheidet, reduziert sich das weitere Vorgehen auf die Bestimmung der Konstanten $C_1$. Diese ergibt sich für das elektrische Skalarpotential $\varphi$ durch Vergleich der allgemeinen Lösung mit dem elektrostatischen Potential ($k \rightarrow 0$) eines sich am Ursprung befindlichen Ladungselements $\rho dV$ zu:

$$C_1^{el} = \frac{1}{4\pi\varepsilon_0} \rho dV \tag{12}.$$

Analog ergibt sich die Konstante für das magnetische Vektorpotential eines sich im Ursprung befindlichen Stromelements $\mathbf{J}dV$ zu:

$$C_2^{mag} = \frac{\mu_0}{4\pi} \mathbf{J}dV \tag{13}.$$

Durch Integration über sämtliche Quellgebiete G ergeben sich die Lösungen der Gleichungen (5a) und (5b) schließlich als:

$$\mathbf{A}(\mathbf{r}) \;=\; \frac{\mu_0}{4\pi} \iiint\limits_{G} \mathbf{J}(\mathbf{r}') \frac{e^{-ikR}}{R}\, dV' \tag{14a}$$

$$\varphi(\mathbf{r}) \;=\; \frac{1}{4\pi\varepsilon_0} \iiint\limits_{G} \rho(\mathbf{r}') \frac{e^{-ikR}}{R}\, dV' \tag{14b},$$

$$\text{mit:}\quad R \;=\; \|\mathbf{r} - \mathbf{r}'\|$$

wobei

R         einen Abstand zwischen Beobachterpunkt **r** und Quellpunkt **r'**,
G         ein Volumengebiet,
**A**, $\varphi$     retardierte Potentiale

bezeichnen.

## BERECHNUNG DER FELDSTÄRKEN

Durch Einsetzen der Gleichung (14a) in (3a) und der Gleichung (14b) in (3b) lassen sich die elektrische Feldstärke und die magnetische Feldstärke bestimmen:

$$\mathbf{E}(\mathbf{r}) \;=\; -\frac{i\omega\mu_0}{4\pi} \iiint\limits_{G} \mathbf{J}(\mathbf{r}') \frac{e^{-ikR}}{R}\, dV' \;-\; \frac{1}{4\pi\varepsilon_0} \iiint\limits_{G} \rho(\mathbf{r}')\nabla \frac{e^{-ikR}}{R}\, dV' \tag{15a}$$

$$\mathbf{H}(\mathbf{r}) \;=\; \frac{1}{4\pi} \iiint\limits_{G} \nabla \frac{e^{-ikR}}{R} \times \mathbf{J}(\mathbf{r}')\, dV' \tag{15b}$$

Unter Verwendung von Kugelkoordinaten folgt somit:

$$\nabla \frac{e^{-ikR}}{R} \;=\; -e^{-ikR}\left(\frac{1}{R^3} + \frac{ik}{R^2}\right)\mathbf{R} \tag{16}.$$

Die Integralformeln zur Bestimmung der elektrischen und magnetischen Feldstärke bei gegebenen Quellen ergeben sich zu:

$$\mathbf{E}(\mathbf{r}) = -\frac{i\omega\mu_0}{4\pi} \iiint\limits_G \mathbf{J}(\mathbf{r'}) \frac{e^{-ikR}}{R} \, dV' + \frac{1}{4\pi\varepsilon_0} \iiint\limits_G \rho(\mathbf{r'}) \, e^{-ikR}\left(\frac{1}{R^3} + \frac{ik}{R^2}\right) \mathbf{R} \, dV'$$

$$(17a)$$

$$\mathbf{H}(\mathbf{r}) = \frac{1}{4\pi} \iiint\limits_G e^{-ikR}\left(\frac{1}{R^3} + \frac{ik}{R^2}\right) \mathbf{J}(\mathbf{r'}) \times \mathbf{R} \, dV' \qquad (17b)$$

Die Gleichung (17b) kann als Erweiterung des Biot-Savartschen Gesetzes für den zeitharmonischen Fall aufgefaßt werden.

## IDEALE LEITER IM ÄUßEREN MAGNETISCHEN FELD

Wird ein ideal leitender Körper in ein äußeres einfallendes Feld $\mathbf{E}^i$, $\mathbf{H}^i$ gebracht, so bildet sich auf der Oberfläche S des ideal leitenden Körpers eine Strom- und Ladungsverteilung $\mathbf{K}$, $\sigma$ derart, daß das Innere des Körpers feldfrei wird (siehe **Fig.2**). Das von den induzierten Quellen $\mathbf{K}$, $\sigma$ erzeugte Feld wird als Streufeld $\mathbf{E}^s$, $\mathbf{H}^s$ bezeichnet. Es läßt sich mit Hilfe der Gleichungen (17a) und (17b) berechnen und ist dem einfallenden Feld $\mathbf{E}^i$, $\mathbf{H}^i$ überlagert. Da das Gesamtfeld

$$\mathbf{E} = \mathbf{E}^i + \mathbf{E}^s \qquad (18)$$

$$\mathbf{H} = \mathbf{H}^i + \mathbf{H}^s \qquad (19)$$

im Inneren des idealen Leiters verschwindet, ergeben sich die Randbedingungen auf der Innenseite der Leiteroberfläche $S^-$ zu:

$$\mathbf{E}_{tan} = 0 \qquad\qquad \text{für} \quad \mathbf{r} \in S^- \qquad\qquad (20a)$$

$$\mathbf{H}_{tan} = 0 \qquad\qquad \text{für} \quad \mathbf{r} \in S^- \qquad\qquad (20b).$$

Beim Durchlaufen der Randflache verhalt sich $\mathbf{H}_{tan}$ unstetig, so daß für die Außenseite der Leiteroberfläche $S^+$ gilt:

$$\mathbf{E}_{tan} = 0 \qquad\qquad \text{für} \quad \mathbf{r} \in S^+ \qquad\qquad (21a)$$

$$\mathbf{H}_{tan} = \mathbf{K} \times \mathbf{n} \qquad\qquad \text{für} \quad \mathbf{r} \in S^+ \qquad\qquad (21b).$$

Dabei ist die Flächenstromdichte $\mathbf{K}$ mit der Flächenladungsdichte $\sigma$ über die zweidimensionale Kontinuitätsglei-

chung

$$\nabla_S \cdot \mathbf{K} = -i\omega\sigma \qquad\qquad (22)$$

verknüpft. Der Ausdruck $\nabla S \cdot \mathbf{K}$ bezeichnet die zweidimensionale Divergenz der Flächenstromdichte $\mathbf{K}$ in der Randfläche S.

Befinden sich mehrere ideal leitende Körper im einfallenden Feld, so setzt sich die Randfläche S aus verschiedenen Teilflächen $S_k$ zusammen, also

$$S = \bigcup_k S_k \qquad\qquad (23).$$

Das Streufeld $\mathbf{E}^S, \mathbf{H}^S$ umfaßt dann sämtliche Teilfelder, die von den einzelnen Körpern ausgehen, die Randbedingungen gemäß den Gleichungen (20a), (20b), (21a) und (21b) gelten für alle Letteroberflächen.

Die Aufgabe eines Streuproblems besteht nun darin, für gegebene einfallende Felder $\mathbf{E}^i, \mathbf{H}^i$ unter Einhaltung der Randbedingungen (20a,b), (21a,b) die Strom- und Ladungsverteilung $\mathbf{K}, \sigma$ auf den Oberflächen des Leiters zu finden.

Nachfolgend wird der Begriff "Stromverteilung" als Bezeichnung für eine gekoppelte Strom- und Ladungsverteilung benutzt, ohne explizit auf die Ladungsverteilung einzugehen. Diese läßt sich jederzeit mit Gleichung (22) herleiten und kann somit dem Begriff "Stromverteilung" untergeordnet werden.

Für das Feld außerhalb der ideal leitenden Körper kann ein klassischer Eindeutigkeitssatz herangezogen werden:

Die Feldverteilung in einem geschlossenen Volumengebiet G ist eindeutig durch die darin enthaltenen Quellen und durch den Verlauf von $\mathbf{E}_{tan}$ oder $\mathbf{H}_{tan}$ auf dem Rand des Volumengebiets G spezifiziert.

Für die Eindeutigkeit behandelter Streuprobleme reicht die Einhaltung einer der Randbedingungen der Gleichungen (20a,b) bzw. (21a,b) aus.

Eine Auswertung von $\mathbf{E}_{tan}$ durch Kombination der Gleichung (18) mit der Gleichung (20a) ergibt

$$-\mathbf{n} \times \mathbf{E}^S = \mathbf{n} \times \mathbf{E}^i \qquad \text{für} \quad \mathbf{r} \in S \qquad\qquad (24)$$

Da sich $\mathbf{E}_{tan}$ beim Durchlaufen der Randflächen stetig verhält, spielt es hierbei keine Rolle, ob die Beziehung auf der Außenseite der Leiteroberfläche $S^+$ oder auf der Innenseite der Leiteroberfläche $S^-$ ausgewertet wird. Das Streufeld $\mathbf{E}^S$ läßt sich mit Gleichung (17a) bestimmen. Wird weiterhin die Flächenladungsdichte $\sigma$, unter Verwendung der Kontinuitätsgleichung (22), durch die Flächenstromdichte $\mathbf{K}$ ausgedrückt, so folgt die elektrische Feldintegralgleichung in integrodifferentieller Form:

$$\mathbf{n} \times \iint\limits_S \frac{e^{-ikR}}{4\pi} \left[ \frac{i\omega\mu_0 \mathbf{K}(\mathbf{r}')}{R} + \frac{\nabla_S' \cdot \mathbf{K}(\mathbf{r}')}{i\omega\varepsilon_0} \left( \frac{1}{R^3} + \frac{ik}{R^2} \right) \mathbf{R} \right] da' = \mathbf{n} \times \mathbf{E}^i(\mathbf{r})$$

$$\text{für} \quad \mathbf{r} \in S \qquad\qquad (25).$$

Eine Auswertung der tangentialen magnetischen Feldstärke $\mathbf{H}_{tan}$ durch Kombination der Gleichung (19) mit Gleichung (20b) bzw. Gleichung (21b) führt zu den Beziehungen

$$-\mathbf{n} \times \mathbf{H}^{S} = \mathbf{n} \times \mathbf{H}^{i} \quad \text{für } \mathbf{r} \in S^{-} \tag{26a}$$

$$\mathbf{K} - \mathbf{n} \times \mathbf{H}^{S} = \mathbf{n} \times \mathbf{H}^{i} \quad \text{für } \mathbf{r} \in S^{+} \tag{26b}$$

Anders als bei Gleichung (24) muß hier berücksichtigt werden, auf welcher Seite der Fläche S sich der Beobachterpunkt $\mathbf{r}$ befindet. Um zu einer davon unabhängigen Integralgleichung zu gelangen, muß das Sprungverhalten von $H_{tan}$ beim Durchlaufen der Fläche S näher betrachtet werden.

Es folgt schließlich die magnetische Feldintegralgleichung für ideal leitende Körper mit glatten Oberflächen:

$$\frac{1}{2} \mathbf{K}(\mathbf{r}) - \mathbf{n} \times \iint_{S} \frac{e^{-ikR}}{4\pi} \left( \frac{1}{R^3} + \frac{ik}{R^2} \right) \mathbf{K}(\mathbf{r}') \times \mathbf{R} \, da' = \mathbf{n} \times \mathbf{H}^{i}(\mathbf{r})$$

$$\text{für } \mathbf{r} \in S \tag{27}$$

Da der Einsatz der magnetischen Feldintegralgleichung (27) sich i.a. auf Körper mit glatten Oberflächen und großen Krümmungsradien beschränkt, wird in der vorliegenden Erfindung weiterhin von der elektrischen Feldintegralgleichung ausgegangen. Dabei wird nicht direkt auf Gleichung (25) zurückgegriffen, sondern eine leicht modifizierte Formulierung der Gleichung (25) verwendet:

$$\mathbf{n} \times \left[ \frac{i\omega\mu_0}{4\pi} \iint_{S} \frac{e^{-ikR}}{R} \mathbf{K}(\mathbf{r}') \, da' - \frac{1}{i\omega 4\pi\varepsilon_0} \nabla \iint_{S} \frac{e^{-ikR}}{R} \nabla_S' \cdot \mathbf{K}(\mathbf{r}') \, da' \right] = \mathbf{n} \times \mathbf{E}^{i}(\mathbf{r})$$

$$\text{für } \mathbf{r} \in S \tag{28}$$

Die Lösung der vier Maxwellschen Gleichungen unter Beachtung der Randbedingungen (20a,b), (21a,b) reduziert sich somit auf die Analyse der Integralgleichung (28). Die dabei gesuchte Lösungsfunktion ist die Stromverteilung $\mathbf{K}(\mathbf{r})$ auf den Oberflächen der beteiligten Körper.

VEKTORBASISFUNKTIONEN

Für die Stromverteilung $\mathbf{K}, \sigma$ ergibt sich unter Berücksichtigung der Kontinuitätsgleichung (22):

$$\mathbf{K}(\mathbf{r}) = \sum_{n=1}^{N} \alpha_n \bar{\psi}_n(\mathbf{r}) \tag{29a}$$

$$\sigma(\mathbf{r}) = - \frac{1}{i\omega} \sum_{n=1}^{N} \alpha_n \nabla_S \cdot \bar{\psi}_n(\mathbf{r}) \tag{29b},$$

wobei

$\overline{\psi}$      eine Vektorbasisfunktion,

$\nabla_S$      einen zweidimensionalen Nabla-Operator in der Fläche S,

$\alpha_n$      ein Moment (skalarer Koeffizient),

N      eine Anzahl der Basisfunktionen,

n      eine Zählvariable

bezeichnen.

Die Verwendung von Vektorbasisfunktionen auf Dreieckelementen ist aus [1] bekannt. In [2] sind Vektorbasisfunktionen für parametrische Elemente dargestellt. Darin ist die Idee enthalten, mit Hilfe einer linearen Flächenstromverteilung eine stückweise konstante Ladungsverteilung zu erreichen. Da sich Vektorbasisfunktionen erster Ordnung über zwei benachbarte Flächenelemente erstrecken, wirken pro Zylinderelement bis zu zwei, pro Dreieckelement bis zu drei und pro Rechteckelement bis zu vier Basisfunktionen zusammen. Eine Regel für die Zuordnung von Basisfunktionen zu Flächenelementen lautet demnach:

Jeder inneren Kante eines Diskretisierungsnetzes entspricht eine Basisfunktion und somit ein Freiheitsgrad des resultierenden Gleichungssystems.

Vektorbasisfunktionen erster Ordnung verfügen i.d.R. über folgende Eigenschaften:

a) Die sich ergebenden Flächenstromdichte **K** ist stetig.

b) Die sich ergebende Flächenladungsdishte $\sigma$ ist stückweise konstant.

c) Auf dem Rand des Definitionsgebiets einer Basisfunktion gilt $K_\perp = 0$

d) Jede Basisfunktion erfüllt für sich die Kontinuitätsgleichung (22).

e) Es treten keine singulären Ladungen auf, wie sie bei Basisfunktionen nullter Ordnung unvermeidbar sind.

f) Jede Basisfunktion kann in großer Entfernung als ein Hertzscher Dipol angesehen werden.

LINIEN-GEWICHTUNGSVERFAHREN

Bei dem Linien-Gewichtungsverfahren wird die Randbedingung $E_{tan}=0$ in Form eines Linienintegrals

$$\int_{C_m} \mathbf{E} \cdot d\mathbf{r} = 0 \qquad\qquad\qquad (30)$$

vorgegeben. Die Kurve $C_m$ bezieht sich dabei auf das m-te Elementpaar, bestehend aus den Elementen $S_{m1}$ und $S_{m2}$, und verläuft geradlinig vom Schwerpunkt des ersten Elements $\mathbf{r}_{m1}^c$ zum Mittelpunkt der gemeinsamen Kante und anschließend geradlinig weiter zum Schwerpunkt des zweiten Elements $\mathbf{r}_{m2}^c$ (siehe **Fig.3**).

Die Idee beim Linien-Gewichtungsverfahren besteht darin, die Gradientenbildung des Skalarpotentials $\varphi$ durch ein Linienintegral in eine diskrete Potentialdifferenz zu überführen. Ausgegangen wird von der elektrischen Feldintegralgleichung (28)

$$(i\omega\mathbf{A} + \nabla\varphi)_{tan} = \mathbf{E}_{tan}^i \qquad \text{für } \mathbf{r} \in S \qquad\qquad (31)$$

mit den Potentialen

$$A = \frac{\mu_0}{4\pi} \iint_S \frac{e^{-ikR}}{R} K(r') \, da' \tag{32a}$$

$$\varphi = -\frac{1}{i\omega\varepsilon_0 4\pi} \iint_S \frac{e^{-ikR}}{R} \nabla_S{}' \cdot K(r') \, da' \tag{32b}$$

Werden die beiden Seiten aus Gleichung (31) vektoriell über die M Kurven $C_m$ gewichtet, so ergeben sich die Gleichungen

$$\int_{C_m} (i\omega A + \nabla\varphi) \cdot dr = \int_{C_m} E^i \cdot dr \quad \text{mit } m=1,2,\ldots,M \tag{33}$$

Die dabei auftretende Integration bezüglich $\nabla\varphi$ kann nun durch die Potentialdifferenz der beiden Endpunkte ersetzt werden. Werden $E^i$ und $A$ weiterhin in erster Näherung als konstant innerhalb eines Flächenelements angesehen, so ergibt sich für Dreieckelemente:

$$i\omega\left[ A\left(r_{m1}^C\right)\frac{d_{m1}^C}{2} - A\left(r_{m2}^C\right)\frac{d_{m2}^C}{2} \right] + \varphi\left(r_{m2}^C\right) - \varphi\left(r_{m1}^C\right) =$$

$$= E^i\left(r_{m1}^C\right)\frac{d_{m1}^C}{2} - E^i\left(r_{m2}^C\right)\frac{d_{m2}^C}{2} \tag{34}$$

$$\text{mit } m=1,2,\ldots,M$$

Die beiden lokalen Ortsvektoren $d_{m1}^c$ und $d_{m2}^c$ sind in Fig.3 dargestellt.

Ein Vorteil des Linien-Gewichtungsverfahrens besteht in der Umgehung der starken Singularitäten aus Gleichung (25), wodurch sich die Berechnung erheblich vereinfacht.

AUFSTELLEN DES LINEAREN GLEICHUNGSSYSTEMS

Für die Potentiale aus Gleichung (32a) und Gleichung (32b) folgen unter Verwendung der Gleichung (29a) und der Gleichung (29b) die Beziehungen:

$$A(r) = \frac{\mu_0}{4\pi} \sum_{n=1}^{N} \alpha_n \iint_{S_n} \frac{e^{-ikR}}{R} \, \bar{\psi}_n(r') \, da' \qquad (35a)$$

$$\varphi(r) = -\frac{1}{i\omega\varepsilon_0 4\pi} \sum_{n=1}^{N} \alpha_n \iint_{S_n} \frac{e^{-ikR}}{R} \, \nabla_S{}' \cdot \bar{\psi}_n(r') \, da' \qquad (35b)$$

mit $S_n := S_{n1} \cup S_{n2}$.

Somit und unter Berücksichtigung der Beziehung $I_n = \alpha_n$ läßt sich die Gleichung (34) als Matrixgleichung der Form

$$Z \cdot I = U \qquad (36)$$

darstellen. Dabei bezeichnet die Matrix

$$Z = \left[ Z_{mn} \right]$$

eine Impedanzmatrix, da sie die Stromamplituden

$$I = \left[ I_n \right]$$

mit den Werten

$$U = \left[ U_m \right]$$

verknüpft. Analog wird die inverse Matrix $Z^{-1}$ als Admittanzmatrix bezeichnet.

Die gesuchten Momente $I_n$ lassen sich durch direktes oder iteratives Lösen des Gleichungssystems (36) bestimmen.

Nach Aufspaltung der Fläche $S_n$ in die beiden Elementflächen $S_{n1}$ und $S_{n2}$ folgt aus Gleichung (34) für das Matrixelement $Z_{mn}$:

$$Z_{mn} = i\omega \left[ (A_{11} + A_{21}) \frac{d_{m1}^C}{2} - (A_{12} + A_{22}) \frac{d_{m2}^C}{2} \right] + $$
$$+ \varphi_{12} + \varphi_{22} - \varphi_{11} - \varphi_{21} \qquad (37)$$

wobei

$$A_{pq} = \frac{\mu_0}{4\pi} \iint_{S_{np}} \frac{e^{-ikR_q}}{R_q} \bar{\psi}_n(\mathbf{r}') \, da' \qquad (38a)$$

$$\varphi_{pq} = -\frac{1}{i\omega\varepsilon_0 4\pi} \iint_{S_{np}} \frac{e^{-ikR_q}}{R_q} \nabla_S{}' \cdot \bar{\psi}_n(\mathbf{r}') \, da' \qquad (38b)$$

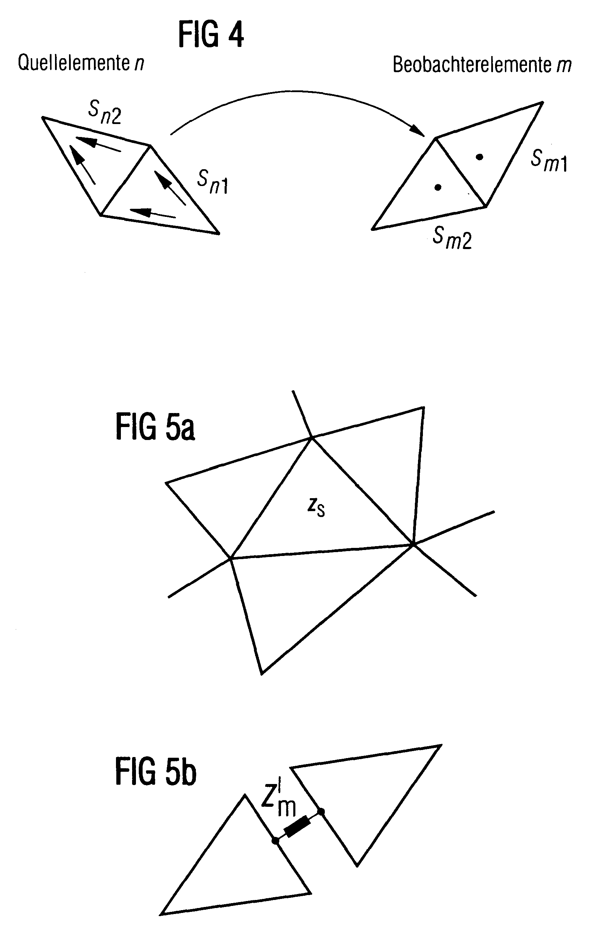

die einzelnen Potentialbeiträge bezeichnen. Das Matrixelement $Z_{mn}$, auch Koppelimpedanz genannt, beschreibt den Einfluß des n-ten auf das m-te Elementpaar. In **Fig.4** sind Koppelpfade dargestellt zwischen einem Quellelement n und einem Beobachterelement m. Beispielsweise bezeichnet $A_{21}$ das von $S_{n2}$ erzeugte Vektorpotential im Mittelpunkt von $S_{m1}$.

Ein programmtechnischer Ansatz zur Berechnung der Impedanzmatrix $[Z_{mn}]$ besteht in einer separaten, vollständigen Auswertung der einzelnen Terme $Z_{mn}$ gemäß Gleichung (37). Da im Fall von Dreieckelementen jedoch bis zu drei Basisfunktionen pro Element beteiligt sind, liegt es nahe, die Berechnung der Impedanzmatrix $[Z_{mn}]$ stufenweise durchzuführen. Dazu werden Teilergebnisse gemäß Gleichung (38a) und Gleichung (38b) jeweils für zwei Dreieckselemente berechnet und, mit geeigneten Faktoren versehen, auf die betroffenen Matrixelemente addiert.

Die rechte Seite des Gleichungssystems (36) wird gemäß Gleichung (34) wie folgt berechnet:

$$U_m = E^i\left(\mathbf{r}_{m1}^C\right) \frac{d_{m1}^C}{2} - E^i\left(\mathbf{r}_{m2}^C\right) \frac{d_{m2}^C}{2} \qquad (39).$$

Für eine einfallende ebene Welle mit $\mathbf{k}$ als Ausbreitungsvektor und $\mathbf{E}_0$ als Polarisationsrichtung läßt sich $\mathbf{E}^i$ über die Beziehung

$$E^i(\mathbf{r}) = E_0 \cdot e^{-i\mathbf{k}\cdot\mathbf{r}} \qquad (40)$$

bestimmen.

IMPEDANZBEHAFTETE ELEMENTE

Werden dünne Schichten mit Hilfe einfacher Flächen modelliert, so lassen sich auch nichtideale Leiter mit ohmschen, induktiven oder kapazitiven Flächenhelägen relativ einfach in das vorhandene Gleichungssystem mit einbeziehen. Für derartige Leiter ändert sich die einzuhaltende Randbedingung von $E_{tan} = 0$ auf

$$E_{tan} = z_S \cdot K \qquad (41)$$

Aufgrund des Skineffekts ist die Flächenimpedanz $z_S$ i.a. frequenzabhängig. Für Schichten, deren Dicke $l_d$ bei der gegebenen Frequenz jedoch klein gegenüber der Skintiefe ist, kann die Stromverteilung über dem Querschnitt als konstant angenommen werden. Beispielsweise läßt sich dadurch die Flächenimpedanz $z_S$ einer widerstandsbehafteten metallischen Schicht bei tiefen Frequenzen näherungsweise über die Beziehung

$$z_s \approx \frac{r_{sp}}{l_d} \qquad (42)$$

berechnen, wobei $r_{sp}$ den spezifischen Widerstand des verwendeten Metalls bezeichnet.

Durch die neue Randbedingung (siehe Gleichung (41)) ändert sich auch das Gewichtungsintegral aus Gleichung (30) zu

$$\int_{C_m} \mathbf{E} \cdot d\mathbf{r} = \int_{C_m} z_S \mathbf{K} \cdot d\mathbf{r} \qquad (43),$$

wobei die in Gleichung (43) auf der rechten Seite entstehenden Größen in Form von Korrekturtermen im Gleichungssystem zu berücksichtigen sind.

In **Fig.5a** sind verteilte Impedanzen gezeigt, wobei sämtliche das Flächenelement, hier dargestellt mit der Flächenimpedanz $z_s$, betreffende Gewichtungsintegrale beeinflußt werden. Für die Korrekturterme (also die rechte Seite der Gleichung (43)) gilt

$$\int_{C_m} z_S \mathbf{K} \cdot d\mathbf{r} = \sum_n I_n \int_{C_m} z_S \bar{\psi}_n \cdot d\mathbf{r} \qquad (44),$$

so daß pro Dreieckelement in der Regel bis zu neun, pro Rechteckelement in der Regel bis zu 16 Matrixeinträge in Gleichung (36) zu korrigieren sind.

Einfacher ist es, konzentrierte Impedanzen in Form von Bauelementen zu berücksichtigen, wie in **Fig.5b** dargestellt ist. Im Gegensatz zu verteilten Impedanzen (siehe Fig.5a) lassen sich konzentrierte Impedanzen durch eine einzige impedanzbehaftete Kante darstellen. Es wird nur ein einziges Gewichtungsintegral und damit auch nur eine einzige Zeile im Gleichungssystem (36) beeinflußt. Für die mit der Impedanz $Z_m^l$ behaftete m-te Kante ergibt sich

$$\sum_{n=1}^{N} Z_{mn} I_n = U_m - Z_m^l I_m \qquad (45),$$

wobei die Größe $Z_{mn}$ in Gleichung (37) und die Größe $U_m$ in Gleichung (39) definiert sind. Nachdem der zusätzliche Term auf die linke Seite gebracht worden ist, kann dieser in Form eines korrigierten Diagonalelements

$$\bar{Z}_{mm} = Z_{mm} + Z_m^l \qquad (46)$$

berücksichtigt werden.

KONZENTRIERTE SPANNUNGSQUELLEN

Analog zum Fall konzentrierter Impedanzen wird auch bei konzentrierten Spannungsquellen eine einzige Zeile des Gleichungssystems (36) beeinflußt:

$$\sum_{n=1}^{N} Z_{mn} I_n = U_m - U_m^l \qquad (47).$$

Die zusätzliche Spannungsquelle $U_m^l$ läßt sich unverändert in die recht Seite des Gleichungssytems (36) aufnehmen, wodurch sich folgende Beziehung ergibt:

$$\overline{U}_m = U_m - U_m^I \tag{48}.$$

## BERÜCKSICHTIGUNG VON SYMMETRIEN

Liegt eine symmetrische Anordnung vor, so läßt sich der Aufwand zur Lösung des Gleichungssystems erheblich reduzieren. Im Fall einer spiegelsymmetrischen Anordnung und einer symmetrischen Anregung $U_m$ läßt sich die Anzahl der Freiheitsgrade um die Hälfte reduzieren. Handelt es sich hingegen um eine unsymmetrische Anregungen, so wird der Anregungsvektor in einen symmetrischen und einen unsymmetrischen Teil aufgespalten.

Mit dem vorgestellten Verfahren lassen sich auch ideal leitende Halbebenen berücksichtigen.

Im Bereich der EMV-Simulation lassen sich mit Hilfe derartiger Überlegungen beispielsweise die metallischen Böden innerhalb der Meßhallen berücksichtigen, ohne daß eine Erhöhung der Anzahl der Freiheitsgrade erfolgt.

## NUMERISCHE AUSWERTUNG DER INTEGRALE

Zur Berechnung der Impedanzmatrix ist es erforderlich, die Integrale aus den Gleichungen (38a) und (38b) geeignet auszuwerten. Sind Quellpunkt und Beobachterpunkt weit genug voneinander entfernt, so genügt es, die Integrale vollständig mit Hilfe numerischer Integrationsformeln auszuwerten. In Fällen, in denen Quellpunkt und Beobachterpunkt nahe beieinander liegen, ergeben sich jedoch Probleme aus der Singularität des Integranden, so daß hierfür spezielle analytische Verfahren zum Einsatz kommen.

Die in den Gleichungen (38a) und (38b) auftretenden Integrale vom Typ

$$\iint_S \mathbf{d}\, \frac{e^{-ikR}}{R}\, da' \tag{49a}$$

$$\iint_S \frac{e^{-ikR}}{R}\, da' \tag{49b}$$

besitzen für R=0 bzw.

$$\mathbf{r} = \mathbf{r}'$$

eine schwache Singularität, die abgespalten und analytisch integriert werden kann. Die Elementfläche, über die sich die Integration erstreckt, ist dabei ganz allgemein als S bezeichnet.

Für das Integral aus Gleichung (49a) ergibt sich nach einigen Umformungen:

$$\iint_S d \frac{e^{-ikR}}{R} \, da' = \underbrace{\iint_S (\tilde{r}' - \tilde{r}) \frac{e^{-ikR} - 1}{R} \, da'}_{IG_1} +$$

$$+ \left(\tilde{r} - \tilde{r}^f\right) \cdot \underbrace{\iint_S \frac{e^{-ikR} - 1}{R} \, da'}_{IG_2} +$$

$$+ \underbrace{\iint_S \frac{\tilde{r}' - \tilde{r}}{R} \, da'}_{IG_3} +$$

$$+ \left(\tilde{r} - \tilde{r}^f\right) \cdot \underbrace{\iint_S \frac{1}{R} \, da'}_{IG_4} \qquad\qquad (50a),$$

wobei

$r^f$ die freie Ecke des jeweiligen Elements (vorzugsweise Dreiecks),
$\tilde{r}$ einen Vektor, der in die Dreiecksebene projiziert wurde (angedeutet durch die Tilde)

bezeichnen.

Für das Integral aus der Gleichung (49b) ergibt sich die analoge Umformung:

$$\iint_S \frac{e^{-ikR}}{R} \, da' = \underbrace{\iint_S \frac{e^{-ikR} - 1}{R} \, da'}_{IG_2} + \underbrace{\iint_S \frac{1}{R} \, da'}_{IG_4} \qquad\qquad (50b).$$

Die singulären Integrale $IG_3$ und $IG_4$ lassen sich analytisch auswerten. Zur Auswertung der Integrale $IG_1$ und $IG_2$ werden numerische Integrationsformeln verwendet, da die Integranden in der gesamten Elementfläche stetig und beschränkt sind.

Als Grenzwert für $R \to 0$ ergibt sich für den Integranden aus $IG_2$ nach der Regel von de l'Hospital:

$$\lim_{R \to 0} \frac{e^{-ikR} - 1}{R} = \lim_{R \to 0} \frac{-ik \cdot e^{-ikR}}{1} = -ik \qquad\qquad (51).$$

Entsprechend folgt für den Integranden aus $IG_1$:

$$\lim_{R \to 0} \left[ (\mathfrak{x}' - \mathfrak{x}) \frac{e^{-ikR} - 1}{R} \right] = 0 \qquad (52).$$

## VERFAHREN DER KONJUGIERTEN GRADIENTEN

Neben der Möglichkeit, die sich ergebenden Gleichungssysteme (36) mit direkten Verfahren zu lösen, bietet sich aus Effizienzgründen der Einsatz von iterativen Lösungsalgorithmen an. Das zu lösende lineare Gleichungssystem aus Gleichung (36) wird allgemein als

$$\mathbf{Ax} = \mathbf{b} \quad \text{mit} \quad \mathbf{A} \in \mathbf{C}^{N \times N} \qquad (53)$$

dargestellt, wobei $\mathbf{C}$ die Menge der komplexen Zahlen bezeichnet. Charakteristisch für iterative Lösungsverfahren ist die generierte Folge von Näherungslösungen $\mathbf{x}^{(m)}$, die als Iterierte bezeichnet werden. Konvergiert diese Folge mit wachsendem m gegen die exakte Lösung $\mathbf{x}$, so kann der Iterationsprozeß nach Erreichen der gewünschten Genauigkeit abgebrochen werden.

Während direkte Lösungsverfahren einen genau determinierten Rechenaufwand besitzen, hängt der Aufwand bei iterativen Lösungsverfahren unmittelbar von der Zahl der benötigten Iterationsschritte ab und ist im Voraus daher zumeist unbekannt.

Zur Lösung der Gleichungssysteme benötigen direkte Lösungsverfahren einen unmittelbaren Zugriff auf die einzelnen Matrixelemente. Bei iterativen Lösungsverfahren hingegen tritt die Matrix $\mathbf{A}$ vorzugsweise nur in Form von Matrix-Vektor-Produkten auf und braucht daher nicht explizit vorzuliegen. Zum Berechnen der Matrix-Vektor-Produkte genügt der Zugriff auf entsprechende Funktionen. Je nach Iterationsverfahren werden pro Iterationsschritt ein oder mehrere Matrix-Vektor-Produkte berechnet, so daß im Fall von voll besetzten Matrizen hierfür in der Regel $O(N^2)$ Fließkomma-operationen benötigt werden. Wichtig bei der Verwendung iterativer Verfahren ist es somit, die Zahl der benötigten Iterationsschritte so klein wie möglich zu halten.

Zu der Klasse der CG-Verfahren (=Verfahren der konjugierten Gradienten, engl.: conjugate gradient) gehört auch das GMRES-Verfahren, das aus [3] bekannt ist. Der dem Verfahren zugrundeliegende Algorithmus basiert auf einer vollständigen $\mathbf{QR}$-Zerlegung des sich ergebenden Lösungsraums und ist daher äußerst robust. Im der vorliegenden Beschreibung wird das GMRES-Verfahren als Vertreter der CG-Verfahren verwendet, wobei die Erfindung nicht auf die Verwendung dieses Verfahrens beschränkt ist.

Um die Lösungsqualität während des Iterationsprozesses beurteilen zu können, wird, ausgehend von Gleichung (53), ein Residuum $\mathbf{r}^{(m)}$

$$\mathbf{r}^{(m)} = \mathbf{b} - \mathbf{Ax}^{(m)} \qquad (54)$$

als ein Fehlermaß für die Iterierte $\mathbf{x}^{(m)}$ eingeführt. Der tatsächliche Fehler $\mathbf{e}^{(m)}$

$$\mathbf{e}^{(m)} = \mathbf{x} - \mathbf{x}^{(m)} \qquad (55)$$

ist mangels einer exakten Lösung $\mathbf{x}$ in der Regel nicht bekannt. Das Residuum $\mathbf{r}^{(m)}$ mißt den Fehler auf der rechten Seite, d.h. im Fall der Momentenmethode die Genauigkeit der Einhaltung der Randbedingungen nach dem m-ten Iterationsschritt. Nach Einsetzen der Gleichung (55) in Gleichung (54) ergibt sich unter Berücksichtigung von Gleichung (53) der Zusammenhang:

$$r^{(m)} = Ae^{(m)} \qquad (56).$$

Als Abbruchkriterium für den Iterationsprozeß wird vorzugsweise gefordert, daß eine Residuumnorm $\|r^{(m)}\|$ um einen vorgebbaren Faktor $\varepsilon$, z.B. $10^{-4}$, verringert worden ist. Falls der Iterationsprozeß mit dem Nullvektor als Anfangswert gestartet wird, kann somit die Iteration abgebrochen werden, sobald die Ungleichung

$$\frac{\|r^{(m)}\|}{\|r^{(0)}\|} = \frac{\|r^{(m)}\|}{\|b\|} < \varepsilon \qquad (57)$$

erfüllt ist. Prinzipiell sollte das Abbruchkriterium so gewählt werden, daß der Fehler durch das Abbrechen der Iteration knapp unterhalb des Diskretisierungsfehlers bleibt.

Die Gesamtzahl der bis zum Erreichen des Abbruchkriteriums benötigten Iterationsschritte werden mit M bezeichnet, wobei gilt m=1,2,...,M.

VORKONDITIONIERUNG

Bei den meisten Problemen kann das Konvergenzverhalten des Iterationsprozesses durch eine sogenannte Vorkonditionierung beschleunigt werden.

Es kann unterschieden werden zwischen einer Vorkonditionierung von links und einer Vorkonditionierung von rechts. Aus Gleichung (53) folgt für das linkstransformierte Gleichungssystem

$$M^{-1}Ax = M^{-1}b \Leftrightarrow \hat{A}x = \hat{b} \quad \text{mit } \hat{A} = M^{-1}A$$
$$\hat{b} = M^{-1}b \qquad (58).$$

Die Matrix $M^{-1}$ wird als Vorkonditionierer bezeichnet. Im Fall

$$M=A$$

sind beispielsweise sämtliche Eigenwerte von $\hat{A}$ eins, so daß sich die exakte Lösung bereits nach einer einzigen Iteration einstellt. Der Aufwand für die Berechnung von $M^{-1}$ ist bei einer derartigen Vorkonditionierung allerdings genau so groß wie bei einer direkten Lösung des Gleichungssytems. Prinzipiell gilt also, daß je ähnlicher sich die Matrizen $A$ und $M$ sind, desto besser ist auch der Effekt der Vorkonditionierung.

Bei Anwendung der Gleichung (58) muß die Größe $\hat{b}$ zu Beginn des Iterationsprozesses zunächst mit Hilfe eines einfachen Matrix-Vektor-Produkts bestimmt werden. Die Matrix $\hat{A}$ wird aus Gründen der Effizienz vorzugsweise nicht explizit berechnet. Da sämtliche Matrizen bei den CG-Verfahren lediglich in Form von Matrix-Vektor-Produkten auftreten, ist es günstiger, derartige Operationen sequentiell, d.h. in Form von zwei separaten Matrix-Vektor-Produkten, auszuwerten. Darüber hinaus genügt anstelle der Inversen $M^{-1}$ die Berechnung einer geeigneten Faktorisierung von $M$. Die betroffenen Matrix-Vektor-Produkte müssen dann allerdings durch passende Rücksubstitutions-Routinen ersetzt werden. Analog zur Vorkonditionierung von links wird die Vorkonditionierung von rechts durchgeführt:

$$A \, M^{-1} M \, x = b \Leftrightarrow \hat{A} \, \hat{x} = b \quad \text{mit} \; \hat{A} = A \, M^{-1}$$
$$\hat{x} = M \, x \qquad (59).$$

Bei Anwendung der Gleichung (59) muß die gesuchte Lösung x nach dem eigentlichen Integrationsprozeß mit Hilfe eines zusätzlichen Matrix-Vektor-Produkts gemäß

$$x = M^{-1} \hat{x}$$

berechnet werden.

Da das Konvergenzverhalten des Iterationsprozesses durch die Verteilung der Eigenwerte von $\hat{A}$ bestimmt wird, sind beide Varianten der Vorkonditionierung bezüglich des Konvergenzverhaltens äquivalent. Im Vergleich zur links-Transformation hat die Vorkonditionierung von rechts allerdings den Vorteil, daß das Residuum aus Gleichung (54) als Fehlermaß unverändert übernommen werden kann. Im Fall der Vorkonditionierung von links läßt sich das Residuum aus Gleichung (54) meist nicht ohne Zusatzaufwand bestimmen. Vorteilhaft wird dann anstelle des in Gleichung (54) festgelegten Residuums die Form

$$\hat{r}^{(m)} = \hat{b} - \hat{A} \, x^{(m)} = M^{-1} r^{(m)} \qquad (60)$$

verwendet. Hier entstehen durch die Matrix $M^{-1}$ Verzerrungen, die das Abbruchkriterium ungünstig beeinflussen können.

JACOBI-VORKONDITIONIERUNG

Eine mögliche Vorkonditionierung besteht aus der Diagonalmatrix

$$M_{ij} = \begin{cases} A_{ij} & \text{für} \quad i = j \\ 0 & \text{sonst} \end{cases} \qquad (61).$$

Die Anwendung dieser sogenannten Jacobi-Vorkonditionierung von links bzw. von rechts entspricht einer diagonalen Skalierung von **A**, bei der die Diagonalelemente durch zeilen- bzw. spaltenweises Durchmultiplizieren des Gleichungssystems auf eins gebracht werden.

Eine weitere vorteilhafte Vorkonditionierung ist eine Blockvariante der Jacobi-Vorkonditionierung. Hierbei muß eine Indexmenge der Freiheitsgrade

$$F = \{1,2,...,N\}$$

zunächst gemäß

$$F = \bigcup_w F_w$$

in paarweise disjunkte Teilmengen $F_w$ aufgeteilt werden. Die Anzahl dieser Teilmengen sei mit W bezeichnet. Anschließend ergibt sich die Matrix **M** über die Beziehung

$$M_{ij} = \begin{cases} A_{ij} & \text{für } i, j \in F_w \\ 0 & \text{sonst} \end{cases} \qquad (62)$$

Bei einer derartigen Block-Jacobi-Vorkonditionierung sind die Matrizen $\mathbf{M}$ und $\mathbf{M}^{-1}$ Blockdiagonalmatrizen. Die Berechnung des Matrix-Vektor-Produkts $\mathbf{M}^{-1}x$ läßt sich mit Hilfe separater Faktorisierungen der einzelnen Diagonalblöcke effizient realisieren.

Ein besonders gutes Konvergenzverhalten stellt sich ein, wenn die Indexmengen $F_w$ physikalischen Teilgebieten zugeordnet werden können. Die Erzeugung derartiger Teilgebiete, im einfachsten Fall Würfel, ist durch schrittweises Unterteilen des zu untersuchenden Körpers in Form einer baumartigen Struktur möglich. Bei jedem Verfeinerungsschritt werden die bereits generierten Würfel vorzugsweise in bis zu acht Tochterwürfel mit halber Seitenlänge aufgespalten. Leere Gebiete werden üblicherweise ignoriert. Die gröbste Verfeinerungsstufe, also ein einziger Block, wird als Stufe 0 bezeichnet. Entsprechend erhöht sich der Stufenindex bei jedem Verfeinerungsschritt um eins.

Vorteilhaft wird vor dem eigentlichen Iterationsprozeß eine Permutation der Freiheitsgrade durchgeführt, damit die sich im Gleichungssystem ergebende Blockstruktur programmtechnisch handhabbar wird. Dazu werden Indizes derart umgeordnet, daß aufeinanderfolgenden Freiheitsgraden gemeinsame Teilgebiete zugeordnet sind. Daraufhin können die den Indexmengen $F_w$ zugeordneten Teilproblem aus $\mathbf{A}$ extrahiert und mit Hilfe einer geeigneten Faktorisierung gelöst werden. Die sich ergebenden Faktorisierungen werden dann zur Blockdiagonalmatrix $\mathbf{M}^{-1}$ zusammengesetzt.

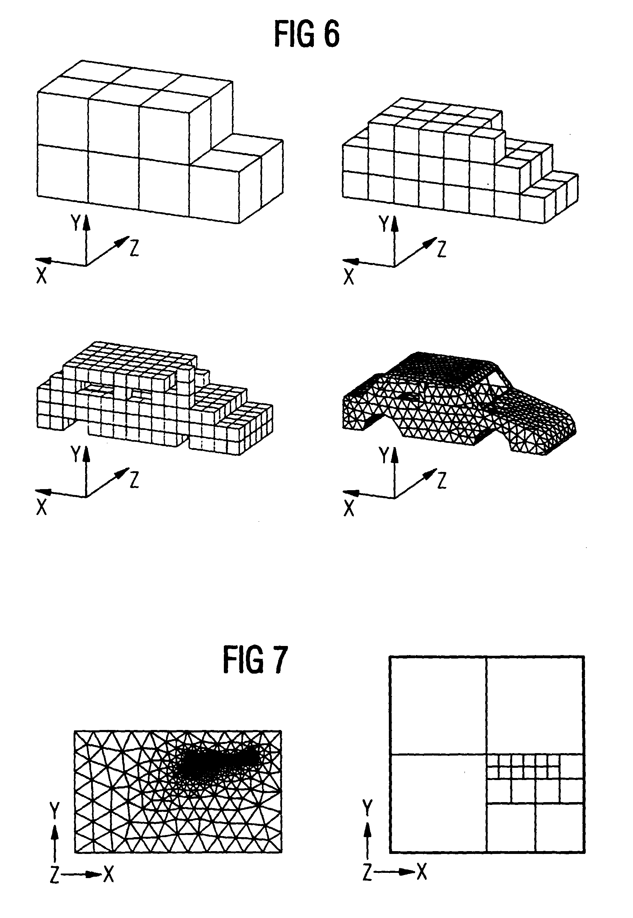

In **Fig.6** wird beispielhaft die Einteilung einer Autokarosserie für die Verfeinerungsstufen 2,3 und 4 gezeigt.

Die Anwendung der Jacobi-Vorkonditionierung ist nicht auf physikalische Teilgebiete derselben Größe beschränkt. Speziell bei einer Diskretisierung mit stark variierenden Elementgrößen bietet es sich an, den Körper in unterschiedlich große Teilgebiete zu unterteilen. In **Fig.7** ist eine adaptive Block-Jacobi-Vorkonditionierung für den Fall einer Leiterbahn über einer unendlich ausgedehnten Massefläche dargestellt. Damit die sich ergebenden Stromverteilung durch die angesetzten Basisfunktionen möglichst genau nachgebildet werden kann, wird der Bereich um die Leiterschleife fein vernetzt. Vorzugsweise wurden die Teilgebiete so gewählt, daß in jedem Gebiet nicht mehr als 300 Freiheitsgrade enthalten sind.

DAS FFS-VERFAHREN (FAST-FREQUENCY-STEPPING)

Viele praktische EMV-Probleme erfordern eine breitbandige Charakterisierung der zu untersuchenden Objekte. Sowohl Störfestigkeits- als auch Emissionsrichtlinien erstrecken sich über breite Frequenzbereiche, so daß zur Simulation der entsprechenden Messungen umfangreiche Rechenserien durchgeführt werden müssen, bei denen die Frequenz f, analog zur realen Messung, schrittweise von einer kleinsten zu untersuchenden Frequenz $f_{min}$ auf eine größte zu untersuchende Frequenz $f_{max}$ erhöht wird. Damit kein kritischer Frequenzbereich übersehen wird, sollte die verwendete Schrittweite $\Delta f$ möglichst klein gewählt werden.

Ein Ansatz zur Reduzierung des Rechenaufwands bei Verwendung iterativer Lösungsverfahren folgt aus der Beobachtung, daß sich die gesuchten Lösungsvektoren für genügend kleine Frequenzschritte nicht allzu sehr voneinander unterscheiden. Also kann der letzte der berechneten Lösungsvektoren als neuer Startwert vorgegeben werden.

Eine weitere vorteilhafte Ausprägung besteht darin, den Startwert durch Extrapolation aus bereits berechneten Lösungsvektoren zu bestimmen. Für den Sonderfall äquidistanter Frequenzen läßt sich beispielsweise die Beziehung

$$x_i^{(0)} = x_{i-3} - 3x_{i-2} + 3x_{i-1} \qquad (63)$$

zur quadratischen Extrapolation eines Startwerts $x_i^{(0)}$ aus den letzten drei Lösungsvektoren $x_{i-3}$, $x_{i-2}$ und $x_{i-1}$ angeben.

Ein schnelles Konvergenzverhalten kann beobachtet werden, wenn eines der Gleichungssysteme mit einem direkten Lösungsverfahren gelöst und die berechnete Faktorisierung anschließend als Vorkonditionierer zur iterativen Lösung des restlichen Gleichungssystems übernommen wird.

Durch Kombination dieses Schemas mit dem oben beschriebenen Extrapolationsansatz ergibt sich ein wirkungsvolles Vorgehen zur breitbandigen Analyse von elektrodynamischen Streuproblemen. Dieses Verfahren wird im folgenden als FFS-Verfahren bezeichnet. Der Algorithmus für den Sonderfall äquidistanter Frequenzen lautet:

```
f := f_min

berechne A und b

berechne M⁻¹ := A (bzw. eine Faktorisierung von A)

x := M⁻¹ b

solange f < f_max

    f := f + Δf

    berechne A und b

    extrapoliere einen Startwert x̂⁽⁰⁾

    löse A M⁻¹ x̂ = b̂ iterativ

    x := M⁻¹ x̂

Ende                                              (Alg-1)
```

Die Rechenserie wird beispielsweise an der tiefsten Frequenz $f_{min}$ gestartet. Nachdem das entsprechende Gleichungssystem aufgestellt und die Matrix **A** geeignet faktorisiert wurde, ergibt sich der erste Lösungsvektor durch Rücksubstitution. Die berechnete Faktorisierung von **A** wird anschließend als Vorkonditionierer $M^{-1}$ zur iterativen Lösung der restlichen Gleichungssysteme übernommen. Die Frequenz f wird dazu schrittweise von $f_{min}$ bis auf $f_{max}$ erhöht, wobei im Fall einer Vorkonditionierung von rechts beachtet werden muß, daß nicht der eigentliche Lösungsvektor x, sondern die transformierte Größe x̂ extrapoliert wird. Der eigentliche Lösungsvektor x kann nach dem Iterationsprozeß über die Beziehung

$$x := M^{-1} \hat{x}$$

bestimmt werden.

Der benötigte Rechenaufwand wird beim FFS-Verfahren im wesentlichen durch die Faktorisierung der Matrix **M**, d.h. durch das direkte Lösen des Gleichungssystems, bestimmt. Mit Hilfe der Matrix $M^{-1}$ als Vorkonditionierer beschränkt sich die anschließende iterative Lösung der restlichen Gleichungssysteme zumeist auf einige wenige Iterationen.

Die Reihenfolge, mit der die einzelnen Frequenzen beim FFS-Verfahren durchlaufen werden, muß nicht notwendigerweise, wie in Algorithmus (Alg-1) dargestellt, von $f_{min}$ nach $f_{max}$ erfolgen. Ebenso sind Varianten des Verfahrens denkbar, die an der höchsten Frequenz $f_{max}$ starten, das entsprechende Gleichungssystem direkt lösen und anschließend die Frequenz schrittweise verringern.

Weiterhin kann der Vorkonditionierer $M^{-1}$ für eine mittlere Frequenz $f_c$ berechnet werden. Anschließend werden die Frequenzen wahlweise von $f_{min}$ nach $f_{max}$, von $f_{max}$ nach $f_{min}$ oder zunächst von $f_c$ nach $f_{min}$ und anschließend von $f_c$ nach $f_{max}$ durchlaufen. Der Vorteil dieser Alternative besteht darin, daß die breitbandige Beschleunigungswirkung der Matrix $M^{-1}$ in beide Frequenzrichtungen ausgenutzt werden kann.

MULTIPOLENTWICKLUNG DER RETARDIERTEN POTENTIALE

Im Mittelpunkt einer schnellen Multipolmethode stehen Verfahren, mit denen sich die Potentiale und Felder einer gegebenen Stromverteilung näherungsweise durch einige wenige skalare Koeffizienten charakterisieren lassen. Wie durch den Begriff "Multipolmethode" angedeutet, werden vorzugsweise sphärische Multipolentwicklungen der Potentiale bzw. Felder eingesetzt.

Da das in dieser Erfindung verwendete Linien-Gewichtungsverfahren (ausführliche Erläuterungen, siehe oben) auf den retardierten Potentialen **A** und $\varphi$ aufsetzt, werden diese beiden Größen durch entsprechende Multipolentwicklungen charakterisiert.

Alternativ dazu ist es möglich, eine Multipolentwicklung der elektrischen Feldstärke **E** durchzuführen. Im Vergleich zu den Multipolentwicklungen der retardierten Potentiale **A** und $\varphi$ ergeben sich hierbei jedoch komplexere analytische Zusammenhänge, die numerisch schwer zu handhaben sind.

Gesucht ist eine Menge von Lösungen der homogenen Helmholtz-Gleichung

$$(\nabla^2 + k^2) \cdot u = 0 \tag{64}$$

in Kugelkoordinaten, wobei

k    die Wellenzahl,
u    eine Funktion, die die Helmholtz-Gleichung erfüllt,

bezeichnen.

Mit Hilfe dieser Lösungen läßt sich jede Funktion u in Form einer unendlichen Reihe darstellen. Die dabei auftretenden Koeffizienten können häufig analytisch bestimmt werden.

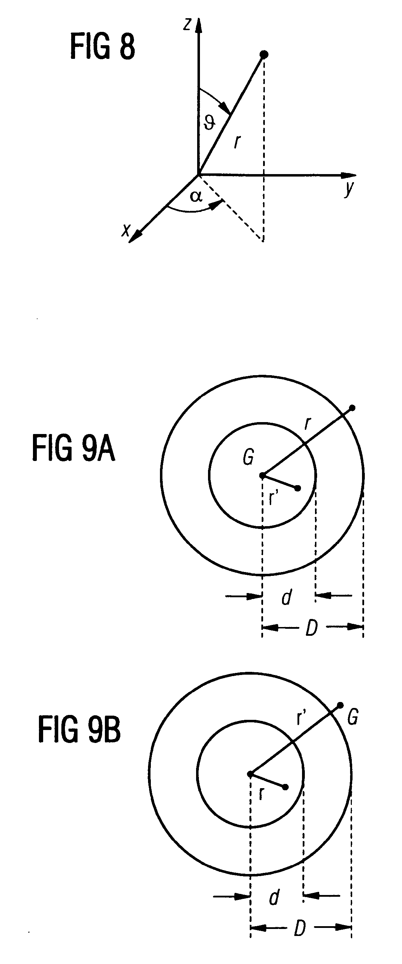

Wird die Helmholtz-Gleichung (64) mit Hilfe der in **Fig.8** dargestellten Kugelkoordinaten r, $\vartheta$, $\alpha$ ausgedrückt, so folgt die Formulierung

$$\frac{1}{r^2} \frac{\partial}{\partial r}\left(r^2 \frac{\partial u}{\partial r}\right) + \frac{1}{r^2 \sin \vartheta} \frac{\partial}{\partial \vartheta}\left(\sin \vartheta \frac{\partial u}{\partial \vartheta}\right) + \frac{1}{r^2 \sin^2 \vartheta} \frac{\partial^2 u}{\partial \alpha^2} + k^2 u = 0 \tag{65}.$$

Zur Lösung dieser partiellen Differentialgleichung wird ein Separationsansatz

$$u = U_r(r) \cdot U_\vartheta(\vartheta) \cdot U_\alpha(\alpha) \tag{66}$$

gewählt, bei dem die Faktoren $U_r$, $U_\vartheta$ und $U_\alpha$ jeweils nur von einer Koordinate abhängen. Nach Einsetzen von Gleichung (66) in Gleichung (65) und Multiplikation mit

$$\frac{r^2 \sin^2 \vartheta}{u}$$

ergibt sich die Gleichung

$$\frac{\sin^2 \vartheta}{U_r} \frac{d}{dr}\left(r^2 \frac{dU_r}{dr}\right) + \frac{\sin \vartheta}{U_\vartheta} \frac{d}{d\vartheta}\left(\sin \vartheta \frac{dU_\vartheta}{d\vartheta}\right) + \frac{1}{U_\alpha} \frac{d^2 U_\alpha}{d\alpha^2} + k^2 r^2 \sin^2 \vartheta = 0 \tag{67}.$$

Der $\alpha$-abhängige Term läßt sich abspalten und mit Hilfe der Separationskonstanten m durch

$$\frac{1}{U_\alpha} \frac{d^2 U_\alpha}{d\alpha^2} = -m^2 \tag{68}$$

ersetzen. Damit folgt aus Gleichung (67) die von $\alpha$ unabhängige Beziehung

$$\frac{1}{U_r} \frac{d}{dr}\left(r^2 \frac{dU_r}{dr}\right) + \frac{1}{U_\vartheta \sin \vartheta} \frac{d}{d\vartheta}\left(\sin \vartheta \frac{dU_\vartheta}{d\vartheta}\right) - \frac{m^2}{\sin^2 \vartheta} + k^2 r^2 = 0 \tag{69}.$$

Zur Separation der $\vartheta$-Abhängigkeit werden die entsprechenden Terme in Gleichung (69) durch die Separationskonstante l ausgedrückt:

$$\frac{1}{U_\vartheta \sin \vartheta} \frac{d}{d\vartheta} \left( \sin \vartheta \frac{dU_\vartheta}{d\vartheta} \right) - \frac{m^2}{\sin^2 \vartheta} = -l(l+1) \tag{70}.$$

Übrig bleibt die von r abhängige Differentialgleichung

$$\frac{1}{U_r} \frac{d}{dr} \left( r^2 \frac{dU_r}{dr} \right) - l(l+1) + k^2 r^2 = 0 \tag{71}.$$

Mit Hilfe des Separationsansatzes aus Gleichung (66) wird die Helmholtz-Gleichung demnach in drei gewöhnliche Differentialgleichungen

$$\frac{d}{dr} \left( r^2 \frac{dU_r}{dr} \right) + \left[ (kr)^2 - l(l+1) \right] \cdot U_r = 0 \tag{72a}$$

$$\frac{1}{\sin \vartheta} \frac{d}{d\vartheta} \left( \sin \vartheta \frac{dU_\vartheta}{d\vartheta} \right) + \left[ l(l+1) - \frac{m^2}{\sin^2 \vartheta} \right] \cdot U_\vartheta = 0 \tag{72b}$$

$$\frac{d^2 U_\alpha}{d\alpha^2} + m^2 U_\alpha = 0 \tag{72c}$$

überführt.

Die Gleichung (72c) ist eine gewöhnliche Differentialgleichung mit konstanten Koeffizienten und den Lösungen

$$U_{\alpha,m} \sim e^{im\alpha} \tag{73}.$$

Aufgrund der Nebenbedingung $U_\alpha(\alpha+2\pi)=U\alpha(\alpha)$ kann m nur ganzzahlige Werte annehmen, d.h. $m \in \mathbf{Z}$ ($\mathbf{Z}$ als Menge der ganzen Zahlen).

Die Gleichung (72b) ist eine spezielle Form der Legendre-Differentialgleichung. Ihre Lösungen sind die zugeordneten Legendre-Funktionen erster und zweiter Art

$$U_{\vartheta,lm} \sim P_l^m(\cos \vartheta), Q_l^m(\cos \vartheta) \tag{74}.$$

Nahezu alle Legendre-Funktionen weisen für $\vartheta=0$ und $\vartheta=\pi$ Singularitäten auf und werden daher vorzugsweise vernachlässigt. Eine Ausnahme bilden die Funktionen $P_l^m(\cos \vartheta)$ mit $l,m \in \mathbf{N}_0$, die mit Legendre-Polynomen l-ter Ordnung $p_l$ über die Beziehung

$$P_l^m(x) = (-1)^m (1 - x^2)^{m/2} \frac{d^m}{dx^m} P_l(x) \tag{75}$$

verknüpft sind. Damit folgt

$$P_l^0(\cos \vartheta) = P_l(\cos \vartheta) \tag{76}$$

sowie

$$P_l^m(\cos \vartheta) = 0 \qquad \text{für } m>l \tag{77}.$$

Die zugeordneten Legendre-Funktionen erster Art von nullter bis zweiter Ordnung lauten:

$$P_0^0(\cos \vartheta) = 1 \qquad P_2^0(\cos \vartheta) = \frac{3}{2}\cos^2 \vartheta - \frac{1}{2}$$

$$P_1^0(\cos \vartheta) = \cos \vartheta \qquad P_2^1(\cos \vartheta) = -3\sin \vartheta \cos \vartheta$$

$$P_1^1(\cos \vartheta) = -\sin \vartheta \qquad P_2^2(\cos \vartheta) = 3\sin^2 \vartheta$$

Die Gleichung (72a) ist ein Besselsche Differentialgleichung mit den sphärischen Bessel-Funktionen

$$U_{r,l} \sim j_l(kr), y_l(kr) \tag{78}$$

als Lösung. Diese sind mit den bekannten zylindrischen Bessel-Funktionen $J_l(x)$, $Y_l(x)$ über die Beziehungen

$$j_l(X) = \sqrt{\frac{\pi}{2x}} \cdot J_{l+0,5}(x), \qquad y_l(x) = \sqrt{\frac{\pi}{2x}} \cdot Y_{l+0,5}(x) \tag{79}$$

verknüpft und lassen sich durch elementare Funktionen darstellen. So gilt beispielsweise

$$j_0(kr) = \frac{\sin(kr)}{kr} \qquad y_0(kr) = -\frac{\cos(kr)}{kr}$$

$$j_1(kr) = \frac{\sin(kr)}{(kr)^2} - \frac{\cos(kr)}{kr} \qquad y_1(kr) = -\frac{\cos(kr)}{(kr)^2} - \frac{\sin(kr)}{kr}.$$

Durch Kombination der sphärischen Bessel-Funktionen ergeben sich die sphärischen Hankel-Funktionen erster und zweiter Art

$$h_l^{(1)}(kr) = j_l(kr) + i \cdot y_l(kr) \tag{80a}$$

$$h_l^{(2)}(kr) = j_l(kr) - i \cdot y_l(kr) \tag{80b},$$

die bezüglich der Darstellung der Gesamtlösung u zu den Funktionen $j_l(kr)$, $y_l(kr)$ äquivalent sind. Je nach Art der Funktion u können vorteilhaft sphärische Bessel-Funktionen bzw. sphärische Hankel-Funktionen vorzuziehen. Bleibt die Funktion u am Ursprung beispielsweise beschränkt, so genügt es, lediglich die Funktionen $j_l(kr)$ anzusetzen, da die Funktionen $y_l(kr)$ und damit die sphärischen Hankel-Funktionen $h_l^{(1)}(kr)$, $h_l^{(2)}(kr)$ für r→0 singulär werden.

Es ergeben sich die gesuchten Lösungen $u_{lm}$ der homogenen Helmholtz-Gleichung in Kugelkoordinaten zu

$$u_{lm} = b_l(kr) \cdot P_l^{|m|}(\cos \vartheta) \cdot e^{im\alpha} \tag{81}$$

wobei $b_l(kr)$ eine Linearkombination aus sphärischen Bessel- bzw. Hankel-Funktionen l-ter Ordnung bezeichnet und $l \in \mathbf{N}_0$ und $m \in \mathbf{Z}$.

Für die Gesamtlösung u ergibt sich unter Berücksichtigung von Gleichung (77) die Reihenentwicklung

$$u = \sum_{l=0}^{\infty} \sum_{m=-l}^{l} C_{ml} \cdot u_{ml} = \tag{82}$$
$$= \sum_{l=0}^{\infty} \sum_{m=-l}^{l} C_{ml} \cdot b_l(kr) \cdot P_l^{|m|}(\cos \vartheta) \cdot e^{im\alpha}$$

mit den konstanten Koeffizienten $C_{lm}$.

KUGELFLÄCHENFUNKTIONEN

Werden die winkelabhängigen Terme $P_l^{|m|}(\cos \vartheta)$ und $e^{im\alpha}$ aus Gleichung (82) zusammengefaßt, so ergeben sich die sogenannten Kugelflächenfunktionen $Y_l^m(\vartheta,\alpha)$. Mit einem geeigneten Normierungsfaktor versehen, folgt deren Definition zu

$$Y_l^m(\vartheta,\alpha) := \sqrt{\frac{2l+1}{4\pi}\frac{(l-m)!}{(l+m)!}} \cdot P_l^m(\cos \vartheta) \cdot e^{im\alpha} \tag{83}$$

für $0 \le m \le l$. Kugelflachenfunktionen mit m<0 lassen sich über eine Symmetriebeziehung

$$Y_l^{-m}(\vartheta,\alpha) = (-1)^m Y_l^m(\vartheta,\alpha)^* \tag{84}$$

definieren. Damit gilt eine Orthonomalitätsbedingung

$$\oiint_\Omega Y_1^m(\vartheta, \alpha) \cdot Y_{1'}^{m'}(\vartheta, \alpha)^* \, da = \delta_{11'} \cdot \delta_{mm'} \tag{85}$$

wobei

$\Omega$     eine Oberfläche einer Einheitskugel,
$\delta$     ein Kronecker-Symbol mit der Definition

$$\delta_{11'} = \begin{cases} 1 & \text{für } 1 = 1' \\ 0 & \text{sonst} \end{cases} \tag{86}$$

bezeichnen.

Die Kugelflächenfunktionen bilden auf $\Omega$ einen vollständigen Satz orthonormaler Funktionen bzgl. der Indizes l und m. Eine der wichtigsten Eigenschaften der Kugelflächenfunktionen ist die daraus folgende Tatsache, daß sich jede beschränkte Funktion $g(\vartheta,\alpha)$ in eine Reihe nach den Kugelflächenfunktionen $Y_l^m(\vartheta,\alpha)$ entwickeln läßt:

$$g(\vartheta,\alpha) = \sum_{l=0}^{\infty} \sum_{m=-l}^{l} C_{ml} \cdot Y_l^m(\vartheta,\alpha) \tag{87}$$

Die Koeffizienten $C_{lm}$ werden, unter Berücksichtigung der Gleichung (85), bestimmt über die Beziehung

$$C_{1m} = \oiint_\Omega g(\vartheta, \alpha) \cdot Y_1^m(\vartheta, \alpha)^* \, da \tag{88}$$

Die Kugelflächenfunktionen nullter bis zweiter Ordnung lauten:

$$Y_0^0 = \frac{1}{\sqrt{4\pi}} \qquad Y_2^{-2} = \sqrt{\frac{15}{32\pi}} \cdot \sin^2 \vartheta \cdot e^{-i2\alpha}$$

$$Y_2^{-1} = \sqrt{\frac{15}{8\pi}} \cdot \sin \vartheta \cdot \cos \vartheta \cdot e^{-i\alpha}$$

$$Y_1^{-1} = \sqrt{\frac{3}{8\pi}} \cdot \sin \vartheta \cdot e^{-i\alpha} \qquad Y_2^0 = \sqrt{\frac{5}{4\pi}} \cdot \left(\frac{3}{2}\cos^2 \vartheta - \frac{1}{2}\right)$$

$$Y_1^0 = \sqrt{\frac{3}{4\pi}} \cdot \cos \vartheta \qquad Y_2^1 = -\sqrt{\frac{15}{8\pi}} \cdot \sin \vartheta \cdot \cos \vartheta \cdot e^{i\alpha}$$

$$Y_1^1 = -\sqrt{\frac{3}{8\pi}} \cdot \sin \vartheta \cdot e^{i\alpha} \qquad Y_2^2 = \sqrt{\frac{15}{32\pi}} \cdot \sin^2 \vartheta \cdot e^{i2\alpha}$$

## ADDITIONSTHEOREM DER GREENSCHEN FUNKTION

Die Greensche Funktion

$$G(\mathbf{r}, \mathbf{r'}) = \frac{e^{-ikR}}{R} \qquad \text{mit } R = \|\mathbf{r} - \mathbf{r'}\| \qquad\qquad (89)$$

beschreibt bis auf einen konstanten Faktor das retardierte Potential einer schwingenden Punktladung, die sich an einem Ort $\mathbf{r'}$ befindet. Die Entwicklung der Greenschen Funktion in sphärische Lösungen der Helmholtz-Gleichung hat folgende Form:

$$\frac{e^{-ikR}}{R} = \begin{cases} -4\pi ik \sum_{l=0}^{\infty} \sum_{m=-1}^{1} j_1(kr') \, Y_1^m(\vartheta', \alpha') \, h_1^{(2)}(kr) \, Y_1^m(\vartheta, \alpha)^* & \forall r > r' \\[2em] -4\pi ik \sum_{l=0}^{\infty} \sum_{m=-1}^{1} h_1^{(2)}(kr') \, Y_1^m(\vartheta', \alpha') \, j_1(kr) \, Y_1^m(\vartheta, \alpha)^* & \forall r < r' \end{cases}$$

$$(90).$$

## MULTIPOLENTWICKLUNGEN

Mit Hilfe der Gleichung (90) läßt sich die Multipolentwicklung der retardierten Potentiale $\mathbf{A}$ und $\varphi$ herleiten. Dazu wird Gleichung (90) in die Gleichungen (14a) und (14b) eingesetzt und die Reihenfolge von Integration und Summation vertauscht. Eine derartige Umformung ist zulässig, da der Sonderfall

$$\mathbf{r} = \mathbf{r'}$$

bereits in Gleichung (90) ausgeschlossen wurde. Die Entwicklung des Vektorpotentials $\mathbf{A}$ erfolgt durch separates Anwenden von Gleichung (90) auf die drei kartesischen Komponenten $A_x$, $A_y$ und $A_z$.

Je nach Lage der Beobachter- und Quellpunkte ergeben sich unterschiedliche Arten von Multipolentwicklungen. Die in **Fig.9a** skizzierte Anordnung mit r>r' führt zur sogenannten globalen Multipolentwicklung, bei der die Wirkung einer lokalen Quellverteilung G nach außen in Form einer Multipolentwicklung dargestellt wird. Die beiden skizzierten Kreise mit den Radien d und D geben die Grenzen für ein Nahfeld (kleiner als Radius d) und ein Fernfeld (größer als Radius D) an.

Die entsprechenden Reihenentwicklungen für die retardierten Potentiale ergeben sich zu

$$\mathbf{A}(\mathbf{r}) = -ik\mu_0 \sum_{l=0}^{\infty} \sum_{m=-l}^{l} \mathbf{a}_{lm}^g h_l^{(2)}(kr) Y_l^m(\vartheta, \alpha)^*$$

$$(91a),$$

$$\varphi(\mathbf{r}) = -\frac{ik}{\varepsilon_0} \sum_{l=0}^{\infty} \sum_{m=-l}^{l} p_{lm}^g h_l^{(2)}(kr) Y_l^m(\vartheta, \alpha)^*$$

wobei sich die globalen Multipolkoeffizienten $\mathbf{a}_{lm}^g$ und $p_{lm}^g$ über die Beziehungen

$$\mathbf{a}_{lm}^g = \iiint_G \mathbf{J}(\mathbf{r}') j_l(kr') Y_l^m(\vartheta', \alpha') \, dV'$$

$$(91b)$$

$$p_{lm}^g = \iiint_G \rho(\mathbf{r}') j_l(kr') Y_l^m(\vartheta', \alpha') \, dV'$$

berechnen lassen. Zur einfacheren Schreibweise wurden die drei skalaren Multipolkoeffizienten von **A** zu vektoriellen Koeffizienten $\mathbf{a}_{mn}$ zusammengefaßt.

Der in **Fig.9b** skizzierte Fall, bei dem sich die Beobachterpunkte näher am Koordinatenursprung befinden als die Quellpunkte, d.h. r<r', führt zu einer lokalen Multipolentwicklung. Hierbei wird die Wirkung einer genügend weit entfernten Quellverteilung G lokal entwickelt. Für die retardierten Potentiale **A** und $\varphi$ folgt

$$\mathbf{A}(\mathbf{r}) = -ik\mu_0 \sum_{l=0}^{\infty} \sum_{m=-l}^{l} \mathbf{a}_{lm}^l j_l(kr) Y_l^m(\vartheta, \alpha)^*$$

$$(92a)$$

$$\varphi(\mathbf{r}) = -\frac{ik}{\varepsilon_0} \sum_{l=0}^{\infty} \sum_{m=-l}^{l} p_{lm}^l j_l(kr) Y_l^m(\vartheta, \alpha)^*$$

mit den lokalen Multipolkoeffizienten

$$a^l_{lm} = \iiint\limits_{G} \mathfrak{J}(\mathbf{r}') \, h^{(2)}_l(kr') \, Y^m_l(\vartheta', \alpha') \, dV'$$

$$(92b).$$

$$p^l_{lm} = \iiint\limits_{G} \rho(\mathbf{r}') \, h^{(2)}_l(kr') \, Y^m_l(\vartheta', \alpha') \, dV'$$

Im Rahmen einer programmtechnischen Realisierung werden die Reihenentwicklungen (91a) und (92a) nach einer endlichen Anzahl von Termen abgebrochen. Gilt für den äußeren Summationsindex l=0,1,...,L, so kann durch vollständige Induktion gezeigt werden, daß die sich ergebenden Multipolentwicklungen L-ter Ordnung stets $(L+1)^2$ Terme umfassen. Zur Multipolentwicklung der retardierten Potentiale $\mathbf{A}$, $\varphi$ bis zur L-ten Ordnung werden somit insgesamt $4(L+1)^2$ skalare Koeffizienten benötigt.

Entsprechend dem Wert von l werden die wichtigsten Multipolkoeffizienten üblicherweise als

l=0: Monopolkoeffizient
l=1: Dipolkoeffizient
l=2: Quadrupolkoeffizient
l=3: Oktupolkoeffizient
l=4: Hexadekupolkoeffizient, usw.

bezeichnet.

Gemäß Fig.9a und Fig.9b wird das Beobachtergebiet von dem Quellgebiet durch zwei Kugelflächen mit den Radien d bzw. D abgegrenzt. Für d<<λ orientiert sich die Konvergenz der Multipolentwicklungen am statischen Fall und hängt im wesentlichen vom Verhältnis d/D ab. Die Reihen konvergieren um so besser, je kleiner d/D gewählt wird. Im Fall elektrisch großer Quellgebiete, d.h. d liegt im Bereich einer Wellenlänge oder darüber, bilden sich hingegen komplexe Interferenzmuster zu deren Erfassung vorzugsweise L ≥ ko gewählt wird.

### MULTIPOLENTWICKLUNGEN DER TEILGEBIETE

Im Rahmen einer schnellen Multipolmethode wird auf die oben beschriebene Unterteilung der zu untersuchenden Körper zurückgegriffen.

In jedem aus der Unterteilung hervorgehenden Teilgebiet wird eine eigenständige globale und lokale Multipolentwicklung angesetzt, d.h. für jede Indexmenge der Freiheitsgrade $F_w$ existiert sowohl eine Reihe globaler Multipolkoeffizienten $a^g_{lm}$, $p^g_{lm}$ als auch eine Reihe entsprechender lokaler Multipolkoeffizienten $a^l_{lm}$, $p^l_{lm}$. Die Multipolentwicklungen werden dabei bezüglich des jeweiligen Würfelmittelpunkts $\mathbf{r}^c_w$ durchgeführt.

Wird die Darstellung der Stromverteilung mit Hilfe der Basisfunktion $\overline{\psi}_n$ (siehe die Gleichungen (29a) und (29b)) in die Gleichungen (91a,b) und (92a,b) eingesetzt, so folgt für die globalen Multipolentwicklungen in den einzelnen Teilgebieten

$$\mathbf{A}_w(\mathbf{r}) = -ik\mu_0 \sum_{l=0}^{L} \sum_{m=-l}^{l} a^l_{lm,w} \, h^{(2)}_l(k\hat{r}) \, Y^m_l(\mathfrak{F}, \tilde{\alpha})^{*}$$

$$(93a)$$

$$\varphi_w(\mathbf{r}) = -\frac{k}{w\varepsilon_0} \sum_{l=0}^{L} \sum_{m=-l}^{l} p^g_{lm,w} \, h^{(2)}_l(k\hat{r}) \, Y^m_l(\mathfrak{F}, \tilde{\alpha})^{*}$$

mit den globalen Multipolkoeffizienten

$$a^g_{1m,w} = \sum_{n \in F_w} I_n \iint_{S_n} \bar{\psi}_n(\mathbf{r}') \, j_1(k\hat{r}') \, Y^m_1(\tilde{\vartheta}', \tilde{\alpha}') \, da'$$

$$(93b)$$

$$p^g_{1m,w} = \sum_{n \in F_w} I_n \iint_{S_n} \nabla_S{}' \cdot \bar{\psi}_n(\mathbf{r}') \, j_1(k\hat{r}') \, Y^m_1(\tilde{\vartheta}', \tilde{\alpha}') \, da'$$

und für die <u>lokalen Multipolentwicklungen</u> in den einzelnen Teilgebieten

$$\mathbf{A}_w(\mathbf{r}) = -ik\mu_0 \sum_{1=0}^{L} \sum_{m=-1}^{1} \mathbf{a}^1_{1m,w} \, j_1(k\hat{r}) \, Y^m_1(\tilde{\vartheta}, \tilde{\alpha})^*$$

$$(94a)$$

$$\varphi_w(\mathbf{r}) = -\frac{k}{w\varepsilon_0} \sum_{1=0}^{L} \sum_{m=-1}^{1} p^1_{1m,w} \, j_1(k\hat{r}) \, Y^m_1(\tilde{\vartheta}, \tilde{\alpha})^*$$

mit den <u>lokalen Multipolkoeffizienten</u>

$$a^1_{1m,w} = \sum_{n \in F_w \backslash N_w} I_n \iint_{S_n} \bar{\psi}_n(\mathbf{r}') \, h^{(2)}_1(k\hat{r}') \, Y^m_1(\tilde{\vartheta}', \tilde{\alpha}') \, da'$$

$$(94b) \,.$$

$$p^1_{1m,w} = \sum_{n \in F_w \backslash N_w} I_n \iint_{S_n} \nabla_S{}' \cdot \bar{\psi}_n(\mathbf{r}') \, h^{(2)}_1(k\hat{r}') \, Y^m_1(\tilde{\vartheta}', \tilde{\alpha}') \, da'$$

Die Tilde über den Kugelkoordinaten r, $\vartheta$ und $\alpha$ deutet an, daß es sich hierbei um lokale Koordinaten bezüglich des jeweiligen Würfelmittelpunkts $\mathbf{r}^c_w$ handelt. Bei Bestimmung der lokalen Multipolkoeffizienten in Gleichung (94b) wurden Quellgebiete berücksichtigt, die außerhalb der Nachbargebiete liegen, d.h. $n \in F\backslash N_w$.

Da die zu untersuchenden Körper im Bereich der EMV-Simulation (Leiterplatten, Verkabelungen, etc.) vorzugsweise auf kleine Teilgebiete führen, wird das Konvergenzverhalten der Reihenentwicklungen aus den Gleichungen (93a) und (94a) vorwiegend durch das Verhältnis d/D bestimmt. Für den Fall, daß die globalen Multipolentwicklungen (93a) außerhalb der Nachbargebiete ausgewertet werden, gilt bei würfelförmigen Teilgebieten in drei Raumdimensionen sowohl für die globalen als auch für die lokalen Entwicklungen

$$\frac{d}{D} = \frac{1}{\sqrt{3}} \,.$$

## STABILITÄTSPROBLEME BEI TIEFEN FREQUENZEN

Erfolgt die Einteilung des zu untersuchenden Körpers nach Freiheitsgraden bzw. nach Basisfunktionen, so können bei tiefen Frequenzen Instabilitäten bezüglich der globalen Multipolentwicklung des elektrischen Skalarpotentials $\varphi$ auf-

treten.

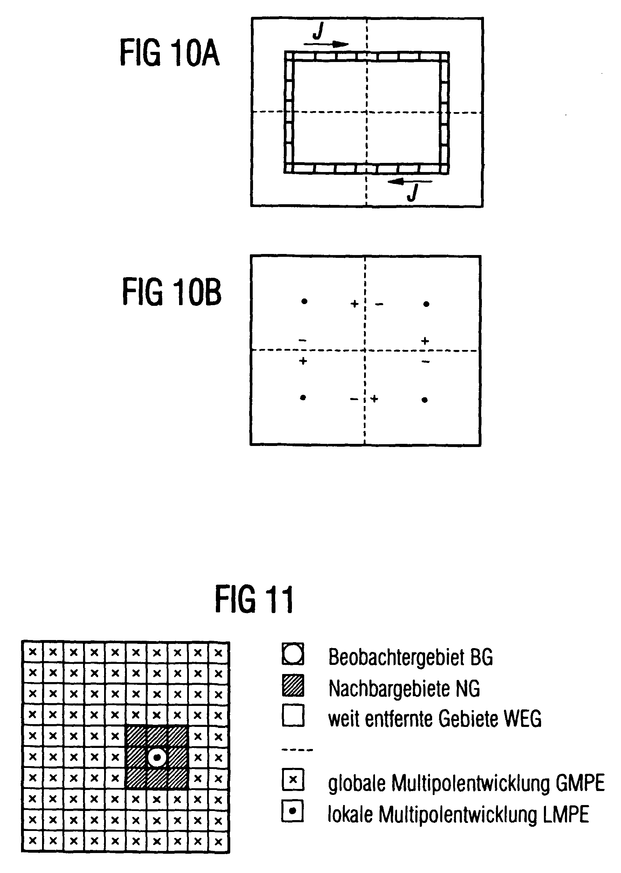

Fig.10 verdeutlicht die Problematik am Beispiel einer einfachen Leiterschleife, deren Skalarpotential durch vier globale Multipolentwicklungen dargestellt werden soll (Fig.10a). Mit fallender Frequenz verschwindet die Gesamtladung auf der Leiteroberfläche, da sich eine zunehmend gleichmäßigere Stromverteilung einstellen wird. Gleichzeitig wachsen jedoch aufgrund der Kontinuitätsgleichung die Ladungen in den einzelnen Basisfunktionen mit $1/\omega$ (vergleiche Gleichung (29b)). Solange sich die Basisfunktionen überlappen, können sich die Ladungen gegenseitig auslöschen und die Forderung nach einer verschwindenden Gesamtladung erfüllen. Durch das "Auseinanderziehen" der Basisfunktionen bleiben jedoch auf den Grenzelementen Ladungen bestehen, die sich nicht mehr gegenseitig kompensieren können, da sie unterschiedlichen Multipolen zugeordnet sind (siehe Fig.10b). Wird die Multipolentwicklung von $\varphi$ nach endlich vielen Termen abgebrochen, so ergeben sich Abbruchfehler, die mit fallender Frequenz zunehmend Probleme verursachen.

Abhilfe wird dadurch geschaffen, daß den Ladungen Gelegenheit zur Auslöschung gegeben wird, bevor die eigentlichen Multipolentwicklungen durchgeführt werden. Eine mögliche programmtechnische Realisierung besteht darin, sämtliche globale Multipolentwicklungen nach Elementen anstatt nach Basisfunktionen durchzuführen.

## DIE SCHNELLE MULTIPOLMETHODE (FMM)

Die schnelle Multipolmethode, nachfolgend als FMM (engl.: fast multiple method) bezeichnet, ist z.B. aus [4] bekannt. Sämtliche Implementierungen der FMM für den dynamischen Fall eignen sich für Streuprobleme, bei denen Teilgebiete wesentlich größer sind als die Wellenlänge. Bei derartigen Problemen ist eine hohe Ordnung der verwendeten Multipolentwicklungen notwendig. Ein wesentlicher Nachteil bei diesem Formalismus ergibt sich aus der Eigenschaft, daß die Multipolkoeffizienten nicht explizit berechnet werden. Anstelle der expliziten Berechnung wird die zu entwickelnde Funktion an diskreten Punkten auf einer umgebenden Kugelfläche "abgetastet", woraufhin die Testwerte unmittelbar weiterverarbeitet werden. Da eine Unterdrückung der Multipolterme höherer Ordnung dabei nicht ohne weiteres möglich ist, können störende Aliasing-Effekte auftreten, welche unter Umständen zu Fehlern in den Multipolentwicklungen führen.

Das hier vorgestellte Verfahren eignet sich insbesondere zur Simulation von Streuproblemen, bei denen die geometrischen Strukturen der Modelle und damit auch die Dimensionen der Teilgebiete kleiner als die Wellenlänge sind. Unter derartigen Voraussetzungen bleiben die Interferenzeffekte begrenzt, so daß bereits wenige Multipolkoeffizienten zur Beschreibung von Potentialen bzw. Feldstärken ausreichen. Mit dem hier beschriebenen Stabilisierungsverfahren verhält sich das Verfahren auch für tiefe Frequenzen stabil.

Besonders interessant ist der Einsatz der schnellen Multipolmethode im Bereich von strahlungsgebundenen EMV-Problemen. Die zu simulierenden Messungen werden vorzugsweise auf einige dB genau durchgeführt.

Bei Anwendung der beschriebenen iterativen Lösungsverfahren auf voll besetzte Gleichungssysteme ergibt sich durch das zu berechnende Matrix-Vektor-Produkt vorzugsweise eine Komplexität von $O(N^2)$ Fließkommaoperationen pro Iterationsschritt. Der Einsatz der FMM ermöglicht hingegen, aufgrund der besonderen Struktur der zugrundeliegenden Integralgleichungen das Matrix-Vektor-Produkt und damit auch einen Iterationsschritt in weniger als $O(N^2)$ Fließkommaoperationen durchzuführen.

Ausgegangen wird von einer komprimierten Darstellung der Matrix $\mathbf{Z}$ in der Form

$$\mathbf{Z} = \mathbf{Z}' + \mathbf{LTG} \qquad\qquad (95),$$

wobei

$\mathbf{Z}'$     denjenigen Teil der Matrix $\mathbf{Z}$, der die Kopplung zwischen benachbarten Teilgebieten beschreibt,
$\mathbf{LTG}$     den restlichen Teil der Matrix $\mathbf{Z}$, der die Kopplung zwischen weit entfernten Teilgebieten beschreibt, d.h. $i \in F_w$, $j \in F \setminus N_w$

bezeichnen.

Für den Fall, daß auf die oben erläuterten Stabilisierungsmaßnahmen (siehe Kapitel: Stabilitätsprobleme bei tiefen Frequenzen) verzichtet wird, bestimmt sich die Matrix $\mathbf{Z}'$ gemäß

$$Z'_{ij} = \begin{cases} Z_{ij} & \text{für} \quad i \in F_W, \; j \in N_W \\ 0 & \text{sonst} \end{cases} \qquad (96).$$

Im stabilisierten Fall treten zusätzliche Korrekturterme auf.

In **Fig.11** ist ein Beobachtergebiet BG der Indexmenge $F_W$ dargestellt, das von Nachbargebieten NG der Indexmenge $N_W$ umgeben ist. Die Nachbargebiete NG sind somit direkt gekoppelt. Weit entfernte Gebiete WEG sind als indirekte Kopplungen zum Beobachtergebiet BG dargestellt. Globale Multipolentwicklungen GMPE werden in Gebieten mit einem Kreuz durchgeführt, wohingegen die lokale Multipolentwicklung in dem Beobachtergebiet BG durchgeführt wird.

Nachfolgend werden die globalen Multipolkoeffizienten $a^g_{lm,w}$, $p^g_{lm,w}$ der einzelnen Teilgebiete in einem Vektor $\mathbf{c}^g$ zusammengefaßt. Analog dazu umfaßt ein Vektor $\mathbf{c}^l$ alle lokalen Multipolkoeffizienten $a^l_{lm,w}$, $p^l_{lm,w}$. Die Nachbargebiete in Fig.11 bleiben im Rahmen der lokalen Multipolentwicklung unberücksichtigt, da die entsprechenden Beiträge bereits in der Matrix $\mathbf{Z}'$ enthalten sind. Werden die Multipolentwicklungen bis zur L-ten Ordnung durchgeführt, so gilt im Fall von W Teilgebieten

$$\mathbf{c}^g, \mathbf{c}^l \in \mathbf{C}^{4W(L+1)^2}.$$

Die Vektoren $\mathbf{c}^g$ und $\mathbf{c}^l$ berechnen sich über die Beziehungen

$$\mathbf{c}^g = \mathbf{G} \cdot \mathbf{I} \qquad (97a)$$

$$\mathbf{c}^l = \mathbf{T} \cdot \mathbf{c}^g = \mathbf{T} \cdot \mathbf{G} \cdot \mathbf{I} \qquad (97b),$$

d.h. die Matrix $\mathbf{G}$ ermöglicht die Bestimmung der globalen Multipolentwicklungen in den Teilgebieten für eine gegebene Stromverteilung $\mathbf{I}$. Anschließend berechnet die sogenannte Translationsmatrix $\mathbf{T}$ daraus die lokalen Multipolkoeffizienten $\mathbf{c}^l$. Die Translationsmatrix $\mathbf{T}$ sammelt die in Fig.11 durch Kreuze dargestellten globalen Multipolentwicklungen in einer lokalen Multipolentwicklung. Schließlich werden die lokalen Multipolentwicklungen mit Hilfe der Matrix $\mathbf{L}$ an den Beobachterpunkten ausgewertet und zu den Nachharbeiträgen addiert:

$$\mathbf{Z}\mathbf{I} = \mathbf{Z}'\mathbf{I} + \mathbf{L}\mathbf{c}^l \qquad (98).$$

Im nicht stabilisierten Fall sind die Matrizen $\mathbf{G}$ und $\mathbf{L}$ Blockdiagonalmatrizen, wobei die einzelnen Diagonalblöcke die Multipolentwicklungen der Teilgebiete mit den darin enthaltenen Basisfunktionen verknüpfen. Beziehungen zur Berechnung der Matrixelemente von $\mathbf{G}$ folgen unmittelbar aus der globalen Multipolentwicklung gemäß den Gleichungen (93a,b). Die gesuchten Matrixelemente entsprechen den in Gleichung (93b) auftretenden Integraltermen. Beziehungen zur Berechnung der Matrixelemente von $\mathbf{L}$ ergeben sich durch Einsetzen der Gleichung (94a) in die Gewichtungsgleichung (34). Hierbei wird vorzugsweise beachtet, daß die Größen $\mathbf{A}$, $\varphi$ aus Gleichung (34) durch die Beiträge der jeweiligen Teilgebiete $\mathbf{A}_w$, $\varphi_w$ zu ersetzen sind.

Impedanzbehaftete Elemente lassen sich gemäß der oben beschriebenen Vorgehensweise berücksichtigen. Da sich lediglich für benachbarte Elemente Korrekturterme ergeben, bleiben durchzuführende Modifikationen auf die Matrix $\mathbf{Z}'$ beschränkt.

Die Berechnung der Translationsmatrix **T** wird nachfolgend beschrieben.

TRANSLATIONSOPERATOREN

Zur eindeutigen Charakterisierung einer Multipolentwicklung gehört neben den einzelnen Mulipolkoeffizienten die Spezifikation des Koordinatensystems, bezüglich dessen die Entwicklung durchgeführt worden ist. Die Multipolkoeffizienten sind dabei unmittelbar sowohl vom Entwicklungszentrum (Koordinatenursprung) als auch von der Definition der Winkelgrößen $\vartheta$ und $\alpha$ (Orientierung der Koordinatenachsen) abhängig.

Die im Rahmen der schnellen Multipolmethode benötigten Operatoren zur Umrechnung der Koeffizienten einer gegebenen Multipolentwicklung auf ein neues Koordinatensystem sind Translationsoperatoren, da die Orientierung der Koordinatenachsen, im Gegensatz zu den sogenannten Rotationsoperatoren, erhalten bleibt. Falls die Multipolentwicklungen nach endlich vielen Koeffizienten abgebrochen werden, lassen sich die gesuchten Translationsoperatoren in Form voll besetzter quadratischer Translationsmatrizen angeben.

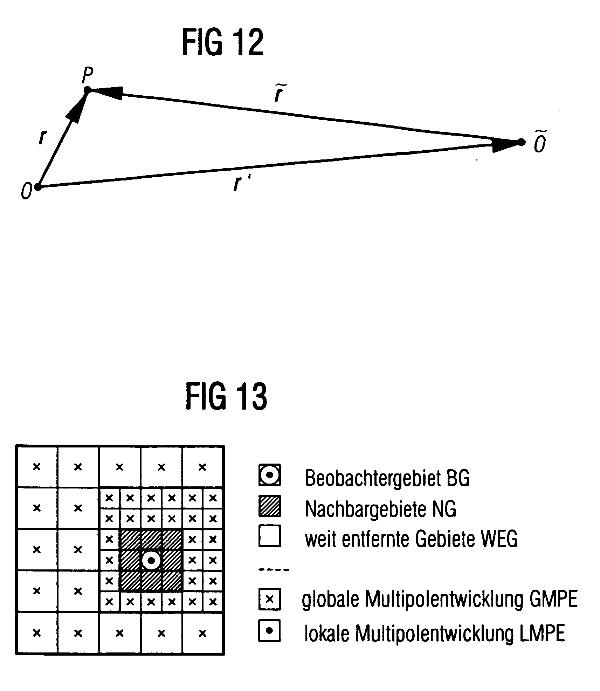

Die nachfolgend verwendeten geometrischen Größen sind zur Veranschaulichung in **Fig.12** dargestellt. Der Ortsvektor eines Punktes P wird im alten Koordinatensystem mit

$$\tilde{\mathbf{r}} = \left( \tilde{r}, \tilde{\vartheta}, \tilde{\alpha} \right)$$

und im neuen Koordinatensystem mit

$$\mathbf{r} = \left( r, \vartheta, \alpha \right)$$

bezeichnet. Weiterhin wird der alte Koordinatenursprung $\tilde{O}$ durch den Ortsvektor

$$\mathbf{r}' = \left( r', \vartheta', \alpha' \right)$$

im neuen Koordinatensystem eindeutig festgelegt. Die Translation erfolgt damit in negativer **r**'-Richtung. Hier werden vorzugsweise solche Translationsoperatoren betrachtet, die eine gegebene globale Multipolentwicklung in eine neue lokale Multipolentwicklung umrechnen, also $r < r'$.

Ausgegangen wird bei der Herleitung der gesuchten Translationsoperatoren von dem Additionstheorem der Greenschen Funktion (siehe Gleichung (90)), woraus sich die Beziehung

$$h_0^{(2)}(k\tilde{r})Y_0^0(\tilde{\vartheta},\tilde{\alpha}) = \sqrt{4\pi} \sum_{l=0}^{L} \sum_{m=-l}^{l} h_l^{(2)}(kr')Y_l^m(\vartheta',\alpha')j_l(kr)Y_l^m(\vartheta,\alpha)^* \qquad (99)$$

zur Translation von globalen Monopoltermen ($l=m=0$) ergibt. Hierbei sind die Identitäten

$$h_0^{(2)}(k\tilde{r}) = i\,\frac{e^{-ik\tilde{r}}}{k\tilde{r}} \quad \text{und} \quad Y_0^0(\tilde{\vartheta},\tilde{\alpha}) = \frac{1}{\sqrt{4\pi}}$$

berücksichtigt worden. Die Tatsache, daß Gleichung (99) die gewünschte Translation beschreibt, läßt sich daran zeigen, daß auf der linken Seite der alte Monopolterm steht, der durch eine Überlagerung aus neuen lokalen Multipoltermen ersetzt werden kann. Die einzelnen Vorfaktoren

$$\sqrt{4\pi}\,h_l^{(2)}(kr')Y_l^m(\vartheta',\alpha')$$

hängen nur vom Translationsvektor **r**' ab und können im voraus berechnet und in der ersten Spalte der Translationsmatrix abgelegt werden.

Für eine programmtechnische Realisierung werden vorzugsweise die gesuchten Operatoren rekursiv durch sukzessive Differentiation der Gleichung (99) bestimmt.

Zur Beschreibung der benötigten Differentiationsbeziehungen werden zunächst die Differentialoperatoren

$$\partial_+ = \frac{\partial}{\partial x} + i \cdot \frac{\partial}{\partial y} \tag{100a}$$

$$\partial_- = \frac{\partial}{\partial x} - i \cdot \frac{\partial}{\partial y} \tag{100b}$$

$$\partial_z = \frac{\partial}{\partial z} \tag{100c}$$

eingeführt. Damit gilt beispielsweise

$$\partial_+ [h_0^{(2)}(kr)Y_0^0(\vartheta,\alpha)] = \sqrt{\frac{2}{3}} \, k \, h_l^{(2)}(kr)Y_l^1(\vartheta,\alpha) \tag{101a}$$

$$\partial_- [h_0^{(2)}(kr)Y_0^0(\vartheta,\alpha)] = -\sqrt{\frac{2}{3}} \, k \, h_l^{(2)}(kr)Y_l^{-1}(\vartheta,\alpha) \tag{101b}$$

$$\partial_z [h_0^{(2)}(kr)Y_0^0(\vartheta,\alpha)] = -\sqrt{\frac{1}{3}} \, k \, h_l^{(2)}(kr)Y_l^0(\vartheta,\alpha) \tag{101c},$$

d.h. Multipolterme erster Ordnung (Dipole) lassen sich direkt durch geeignetes Differenzieren des Monopolterms herleiten. Entsprechende Beziehungen für Multipolterme höherer Ordnung werden im nachfolgend hergeleitet.

Für sphärische Hankel-Funktionen lassen sich die elementaren Differentiationsbeziehungen

$$\partial_+ [r^{l+1} h_l^{(2)}(kr)] = kr^{l+1} h_{l-1}^{(2)}(kr) \sin\vartheta \, e^{i\alpha} \tag{102a}$$

$$\partial_- [r^{l+1} h_l^{(2)}(kr)] = kr^{l+1} h_{l-1}^{(2)}(kr) \sin\vartheta \, e^{-i\alpha} \tag{102b}$$

$$\partial_z [r^{l+1} h_l^{(2)}(kr)] = kr^{l+1} h_{l-1}^{(2)}(kr) \cos\vartheta \tag{102c}$$

zeigen. Entsprechendes gilt für Kugelflächenfunktionen

$$\partial_+ \left[\frac{Y_l^m(\vartheta,\alpha)}{r^{l+1}}\right] = a_l^m (2l+1) \frac{Y_{l+1}^{m+1}(\vartheta,\alpha)}{r^{l+2}} \tag{103a}$$

$$\partial_- \left[\frac{Y_l^m(\vartheta,\alpha)}{r^{l+1}}\right] = -b_l^m(2l+1) \frac{Y_{l+1}^{m-1}(\vartheta,\alpha)}{r^{l+2}} \tag{103b}$$

$$\partial_z \left[\frac{Y_l^m(\vartheta,\alpha)}{r^{l+1}}\right] = -c_l^m (2l+1) \frac{Y_{l+1}^m(\vartheta,\alpha)}{r^{l+2}} \tag{103c}$$

mit den konstanten Koeffizienten

$$a_l^m = \sqrt{\frac{(l+m+1)(l+m+2)}{(2l+1)(2l+3)}} \tag{104a}$$

$$b_l^m = \sqrt{\frac{(l-m+1)(l-m+2)}{(2l+1)(2l+3)}} \tag{104b}$$

$$c_l^m = \sqrt{\frac{(l + m + 1)(l - m + 1)}{(2l + 1)(2l + 3)}} \qquad (104c),$$

die sich aufgrund des Normierungsfaktors aus der Definition der Kugelflächenfunktionen (siehe Gleichung (83)) ergeben. Durch die Kombination von Gleichungen (102a-c) mit Gleichungen (103a-c) folgen die Differentiationsbeziehungen für Multipolterme höherer Ordnung

$$\partial_+[\, h_l^{(2)}(kr)Y_l^m(\vartheta,\alpha)\, ] = a_l^m (2l + 1)\frac{h_l^{(2)}(kr)}{r} Y_{l+1}^{m+1}(\vartheta,\alpha) + \qquad (105a)$$
$$+ kh_{l-1}^{(2)}(kr)\sin\vartheta\, e^{i\alpha} Y_l^m(\vartheta,\alpha)$$

$$\partial_-[\, h_l^{(2)}(kr)Y_l^m(\vartheta,\alpha)\, ] = -b_l^m (2l + 1)\frac{h_l^{(2)}(kr)}{r} Y_{l+1}^{m-1}(\vartheta,\alpha) + \qquad (105b)$$
$$+ kh_{l-1}^{(2)}(kr)\sin\vartheta\, e^{-i\alpha} Y_l^m(\vartheta,\alpha)$$

$$\partial_z[\, h_l^{(2)}(kr)Y_l^m(\vartheta,\alpha)\, ] = -c_l^m (2l + 1)\frac{h_l^{(2)}(kr)}{r} Y_{l+1}^m(\vartheta,\alpha) + \qquad (105c),$$
$$+ kh_{l-1}^{(2)}(kr)\cos\vartheta\, Y_l^m(\vartheta,\alpha)$$

die sich mit Hilfe der Rekursionsbeziehung für sphärische Hankel-Funktionen

$$h_{l-1}^{(2)}(kr) + h_{l+1}^{(2)}(kr) = (2l + 1)\, \frac{h_l^{(2)}(kr)}{kr} \qquad (106)$$

sowie den Rekursionsbeziehungen für Kugelflächenfunktionen

$$\sin\vartheta\, e^{i\alpha} Y_l^m(\vartheta,\alpha) = a_{l-1}^{-m-1} \cdot Y_{l-1}^{m+1}(\vartheta,\alpha) - a_l^m \cdot Y_{l+1}^{m+1}(\vartheta,\alpha) \qquad (107a)$$

$$\sin\vartheta\, e^{-i\alpha} Y_l^m(\vartheta,\alpha) = -b_{l-1}^{-m+1} \cdot Y_{l-1}^{m-1}(\vartheta,\alpha) - b_l^m \cdot Y_{l+1}^{m-1}(\vartheta,\alpha) \qquad (107b)$$

$$\cos\vartheta\, Y_l^m(\vartheta,\alpha) = c_{l-1}^m \cdot Y_{l-1}^m(\vartheta,\alpha) - c_l^m \cdot Y_{l+1}^m(\vartheta,\alpha) \qquad (107c)$$

weiter umformen lassen. Dabei ergeben sich schließlich die symmetrischen Differentiationsbeziehungen

$$\partial_+[\, h_l^{(2)}(kr)Y_l^m(\vartheta,\alpha)\, ] = a_l^m\, k\, h_{l+1}^{(2)} Y_{l+1}^{m+1}(\vartheta,\alpha) + \qquad (108a)$$
$$+ a_{l-1}^{-m-1}\, k\, h_{l-1}^{(2)}(kr) Y_{l-1}^{m+1}(\vartheta,\alpha)$$

$$\partial_-[\, h_l^{(2)}(kr)Y_l^m(\vartheta,\alpha)\, ] = -b_l^m\, k\, h_{l+1}^{(2)} Y_{l+1}^{m-1}(\vartheta,\alpha) - \qquad (108b)$$
$$- b_{l-1}^{-m+1}\, k\, h_{l-1}^{(2)}(kr) Y_{l-1}^{m-1}(\vartheta,\alpha)$$

$$\partial_z[\, h_l^{(2)}(kr)Y_l^m(\vartheta,\alpha)\, ] = -c_l^m\, k\, h_{l+1}^{(2)} Y_{l+1}^m(\vartheta,\alpha) + \qquad (108c)$$
$$+ c_{l-1}^m\, k\, h_{l-1}^{(2)}(kr) Y_{l-1}^m(\vartheta,\alpha)$$

mit deren Hilfe sich die gesuchten Translationsoperatoren berechnen lassen. Hierzu wird durch sukzessives Differenzieren von Gleichung (99) bezüglich der Koordinaten r', $\vartheta$', $\alpha$' von Translationsoperatoren (l-1)-ter und l-ter Ordnung auf Translationsoperatoren (1+1)-ter Ordnung geschlossen. Dabei sei beachtet, daß $\tilde{\partial} = -\partial$' gilt.

## MEHRSTUFIGE ALGORITHMEN

Neben der beschriebenen einstufigen FMM existieren diverse mehrstufige Varianten, bei denen Teilgebiete unterschiedlicher Größe verwendet werden. Zur Veranschaulichung sind in **Fig.13** relevante Teilgebiete für den Fall einer zweistufigen FMM-Variante dargestellt.

In Fig.13 ist ein Beobachtergebiet BG der Indexmenge Fw dargestellt, das von Nachbargebieten NG der Indexmenge $N_W$ umgeben ist. Die Nachbargebiete NG sind somit direkt gekoppelt. Weit entfernte Gebiete WEG sind als indirekte Kopplungen zum Beobachtergebiet BG dargestellt. Globale Multipolentwicklungen GMPE werden in Gebieten mit einem Kreuz durchgeführt, wohingegen die lokale Multipolentwicklung in dem Beobachtergebiet BG durchgeführt wird.

Die Größe der Teilgebiete wird bei mehrstufigen FMM-Algorithmen vorzugsweise proportional zum Abstand zwischen Beobachtergebiet und Quellgebiet bestimmt. Die Multipolentwicklungen auf den verschiedenen Verfeinerungsebenen lassen sich mit Hilfe von speziellen Translationsoperatoren ineinander umrechnen, so daß vorteilhaft nicht für jedes Teilgebiet der hierarchischen Gebietsstruktur eine vollständige Multipolentwicklung durchgeführt wird.

Im dynamischen Fall werden vorzugsweise für größere Teilgebiete Multipolentwicklungen höherer Ordnung durchgeführt.

In **Fig.1** ist ein Blockdiagramm dargestellt, das Schritte eines Verfahrens zur Bestimmung des elektromagnetischen Feldes umfaßt. In einem Schritt 1a wird die globale Multipolentwicklung für den in Teilbereiche unterteilten zu untersuchenden Körper, wie oben beschrieben, durchgeführt. In einem Schritt 1b wird die lokale Multipolentwicklung für den in Teilbereiche unterteilten Körper durchgeführt. Schließlich wird in einem Schritt 1c durch eine Überlagerung aus der globalen und der lokalen Multipolentwicklung das elektromagnetische Feld des Körpers bestimmt.

Im Rahmen dieses Dokuments wurden folgende Veröffentlichungen zitiert:

[1] Sadasiva M. Raoi, Donald R. Wilton, Allen W. Glisson: Electromagnetic Scattering by Surfaces of Arbitrary Shape. IEEE Trans. Antennas Propagat., Vol.30, No.3, pp.409-418, May 1982.

[2] Ning Van Zhu and Friedrich M. Landstofer: Application of Curved Parametric Triagular and Quadrilateral Edge Elements in the Moment Method Solution of the EFIE. IEEE Microwave and Guided Wave Letters, Vol.3, No.9, pp.319-321, September 1993.

[3] Youcef Saas and Martin H. Schultz: GMRES: A Generalized Minimal Residual Algorithm for Solving Nonsymmetric Linear Systems. SIAM J. Sci. Stat. Comp., Vol.7, No.3, pp.856-869, July 1986.

[4] V. Rokhlin: Rapid Solution of Integral Equations of Classical Potential Theory. Journal of Computational Physics, Vol.60, pp.187-207, 1985.

## Patentansprüche

1. Rechnergestütztes Simulationsverfahren zur Bestimmung eines elektromagnetischen Feldes eines Körpers, der mehrere Teilgebiete umfaßt und mehrere Ladungen und Ströme enthält,

   a) bei dem in jedem der mehreren Teilgebiete eine globale Multipolentwicklung, die die Wirkung der Ladungen und Ströme für entfernte Punkte in Form einer Multipolentwicklung darstellt, und eine lokale Multipolentwicklung, die die Wirkung der Ladungen und Ströme an Punkten innerhalb des jeden der mehreren Teilgebiete in Form einer Multipolentwicklung darstellt, durchgeführt werden,
   b) bei dem durch eine Überlagerung aus der globalen Multipolentwicklung und der lokalen Multipolentwicklung der mehreren Teilgebiete das elektromagnetische Feld des Körpers bestimmt wird.

2. Verfahren nach Anspruch 1,
   bei dem bis zu einem vorgebbar kleinen Fehlermaß folgende Schritte zur Bestimmung des elektromagnetischen Feldes des Körpers iterativ durchgeführt werden, wobei als eine Anfangsbedingung l = 0 gilt:

   a) Berechnung der globalen Multipolentwicklungen mit globalen Multipolkoeffizienten gemäß

$$c^g = GI,$$

wobei

$c^g$    ein Vektor ist, der die globalen Multipolkoeffizienten der mehreren Teilgebiete umfaßt,

I    ein Vektor ist, der eine gegebene Stromverteilung angibt,

G    eine Matrix ist, die eine Bestimmung der globalen Multipolkoeffizienten in dem einen Teilgebiet der mehreren Teilgebiete für die gegebene Stromverteilung I angibt;

b) Berechnung der lokalen Multipolentwicklung mit lokalen Multipolkoeffizienten gemäß

$$c^l = Tc^g,$$

wobei

$c^l$    ein Vektor ist, der die lokalen Multipolkoeffizienten der mehreren Teilgebiete umfaßt,

T    eine Translationsmatrix ist, durch die die globalen Multipole in lokale Multipole zusammengeführt werden;

c) Bestimmung des elektromagnetischen Felds aus

$$ZI = Z'I + Lc^l,$$

wobei

Z    eine Impedanzmatrix,

Z'    einen Teil der Impedanzmatrix Z, der Kopplungen zwischen den Teilgebieten darstellt,

L    eine Matrix zur Auswertung der lokalen Multipolkoeffizienten,

bezeichnen.

3. Verfahren nach einem der vorhergehenden Ansprüche,
   bei dem die Teilgebiete gleich groß sind.

4. Verfahren nach einem der Ansprüche 1 oder 2,
   wobei die Teilgebiete in ihrer Größe proportional zu einer Entfernung von einem Beobachtergebiet sind.

5. Verfahren nach einem der vorhergehenden Ansprüche,
   bei dem das eine Teilgebiet der mehreren Teilgebiete jeweils einem Bereich mit einheitlicher physikalischer Eigenheit zugeordnet wird.

6. Verfahren nach einem der vorhergehenden Ansprüche,
   bei dem in einem Verfeinerungsschritt das Teilgebiet der mehreren Teilgebiete in bis zu acht Bereiche aufgespalten wird.

7. Verfahren nach einem der Ansprüche 2 bis 6,
   bei dem ein impedanzbehaftetes Element, das ein Bestandteil des Teilgebiets des Körpers ist, direkt in der Matrix Z' als Impedanz berücksichtigt wird.

8. Verfahren nach einem der vorhergehenden Ansprüche,

bei dem das elektromagnetische Feld für vorgebbare Frequenzen bestimmt wird.

9. Verfahren nach Anspruch 8,
bei dem die vorgebbaren Frequenzen durch eine minimale Frequenz und durch eine maximale Frequenz bestimmt sind, wobei bei der minimalen Frequenz gestartet wird und bis zu der maximalen Frequenz fortgesetzt mit einer vorgebbaren Schrittweite jeweils das elektromagnetische Feld bestimmt wird.

10. Verfahren nach Anspruch 8,
bei dem die vorgebbaren Frequenzen durch eine minimale Frequenz und durch eine maximale Frequenz bestimmt sind, wobei bei der minimalen Frequenz gestartet wird und bis zu der maximalen Frequenz fortgesetzt mit einer vorgebbaren Schrittweite jeweils das elektromagnetische Feld bestimmt wird.

11. Verfahren nach Anspruch 8,
bei dem die vorgebbaren Frequenzen durch eine minimale Frequenz und durch eine maximale Frequenz bestimmt sind, wobei bei einer Frequenz zwischen der minimalen Frequenz und der maximalen Frequenz gestartet wird und bis zu der maximalen Frequenz oder bis zu der minimalen Frequenz fortgesetzt mit einer vorgebbaren Schrittweite jeweils das elektromagnetische Feld bestimmt wird.

12. Verfahren nach einem der vorhergehenden Ansprüche,
bei dem Stabilität bei tiefen Frequenzen gewährleistet wird, indem die globale Multipolentwicklungen elementweise anstatt nach Basisfunktionen durchgeführt werden.

13. Verfahren nach einem der vorhergehenden Ansprüche,
bei dem eine elektromagnetische Verträglichkeit des Körpers bestimmt wird.

**FIG 1**

1a — | Durchführen der globalen Multipolentwicklungen |

1b — | Durchführen der lokalen Multipolentwicklungen |

1c — | Bestimmung des elektromagnetischen Feldes aus Überlagerung der durchgeführten Multipolentwicklungen |

**FIG 2**

$E^i, H^i$ $n$ $S^+$ $S^-$ $E^S, H^S$

$J, E, H = 0$
$\rho = 0$

$\sigma$ $K$

**FIG 3**

$S_{m1}$ $S_{m2}$

$d^C_{m1}$ $C_m$ $d^C_{m2}$

$r^C_{m1}$ $r^C_{m2}$

$O$

# FIG 4

Quellelemente $n$                  Beobachterelemente $m$

$S_{n2}$

$S_{n1}$

$S_{m1}$

$S_{m2}$

# FIG 5a

$z_S$

# FIG 5b

$Z_m^I$

# FIG 6

# FIG 7

FIG 8

FIG 9A

FIG 9B

**FIG 10A**

**FIG 10B**

**FIG 11**

◯ Beobachtergebiet BG

▨ Nachbargebiete NG

☐ weit entfernte Gebiete WEG

- - - -

⊠ globale Multipolentwicklung GMPE

⊡ lokale Multipolentwicklung LMPE

# FIG 12

# FIG 13

| | | |
|---|---|---|
| ⊙ | Beobachtergebiet BG | |
| ▨ | Nachbargebiete NG | |
| ☐ | weit entfernte Gebiete WEG | |
| ---- | | |
| ⊠ | globale Multipolentwicklung GMPE | |
| ⊡ | lokale Multipolentwicklung LMPE | |